# EUROPÄISCHE PATENTANMELDUNG

(11) **EP 4 840 890 A1**
(43) Veröffentlichungstag der Anmeldung: **18.11.2026**
(21) Anmeldenummer: 25176847.9
(22) Anmeldetag: 15.05.2025
(51) Int. Cl.: C08F 290/06, C08G 18/00, C08G 18/24, C08G 18/67, C08G 18/79, C08G 18/80, C09D 175/16, C08J 7/04, B32B 21/06, C08J 7/046

(54) **VERFAHREN ZUR HERSTELLUNG EINER TRANSFERFOLIE UND EINER BESCHICHTETEN SCHICHTPRESSSTOFFPLATTE**

(71) Anmelder: SUP - Functional Films GmbH, 1230 Wien (AT)
(72) Erfinder: Seyoum, Ghirmay, 63329 Egelsbach (DE); Ullrich, Gerald, 3032 Eichgraben (AT)
(74) Vertreter: Drosdow, Eugen

(57) **Zusammenfassung**

Es wird ein Verfahren zur Herstellung einer Transferfolie beschrieben, umfassend ein Trägermaterial und eine Beschichtung, welche ein thermoplastisches Polyurethan(meth)acrylat-Polymer umfasst. Mit Hilfe der Transferfolie kann auf einer Schichtpressstoffplatte eine Beschichtung auf Basis von einem vernetzten Polyurethan(meth)acrylat-Polymer gebildet werden, Diese zeichnet sich durch besonders gute Verschleißeigenschaften, insbesondere durch eine besonders hohe Kratzfestigkeit aus.

## Beschreibung

Die vorliegende Erfindung betrifft ein Verfahren zur Herstellung von flächigen Materialien, wie Folien, Schichtpressstoffplatten usw., welche mit einer vernetzten Polyurethan(meth)acrylat- Beschichtung versehenen sind. Bei diesem Verfahren findet das sogenannte Transferverfahren Anwendung, bei dem eine Lackzusammensetzung auf ein flächiges Material, z.B. eine Schichtpressstoffplatte, nicht direkt, sondern mit Hilfe eines Trägermaterials aufgebracht wird, wobei die Lackzusammensetzung zunächst auf das Trägermaterial aufgetragen wird und dort eine thermoplastische Beschichtung bildet. In einem separaten Arbeitsschritt wird das mit der Beschichtung versehene Trägermaterial mit dem flächigen Material verbunden, wonach das Trägermaterial abgezogen wird. Die Aufbringung der Beschichtung auf das flächige Material wird somit auf indirekte Weise durchgeführt.

Vergleichbare Transferverfahren sind beispielsweise aus der Patentschrift DE 35 45 171 C1 bekannt. In dieser Veröffentlichung wird ein indirektes Verfahren zur Herstellung von differenzierten Oberflächenfinishes beschrieben, wobei teilweise ausgehärtete Lacksysteme von Trägermaterialien partiell auf Schichtstoffmaterialien übertragen und die Trägermaterialien nach der Applikation entfernt werden. Als Trägermaterialien finden Metallfolien, beispielsweise Aluminiumfolien, Verwendung. In Bezug auf den Lack wird eine Vielzahl von verschiedenen Lacksystemen vorgeschlagen. Wie die Beispiele dieser Veröffentlichung zeigen, wird der Lack auf dem Trägermaterial durch Trocknen ausgehärtet. Vorzugsweise werden hierbei die Lacksysteme nur partiell ausgehärtet, so dass diese eine Restreaktivität besitzen, und an weiteren im Prozess stattfindenden chemischen Reaktionen (beim nachfolgenden Verpressen) derart partizipieren, dass gute Haftungen mit den flächigen Materialien (Untergründen) erzielt werden.

DE 103 18 542 A1 offenbart ein Verfahren zur Herstellung von flächigen Materialien, wie Folien, die mit einer, einen Lack enthaltenden Schutzschicht versehen sind. Der Lack wird auf ein Trägermaterial aufgetragen und danach zumindest teilweise ausgehärtet. Es wird ein Lack verwendet, der auf radikalische und/oder ionische Weise polymerisierbare Substanzen enthält, und der auf das Trägermaterial aufgetragene Lack wird durch radikalische und/oder ionische Polymerisation zumindest teilweise ausgehärtet. Das so mit dem Lack versehene Trägermaterial wird mit der Lackseite mit dem flächigen Material verbunden, und danach wird das Trägermaterial abgezogen. Nach einem Ausführungsbeispiel wird auf einer Polypropylenfolie eine Mischung aus Urethanacrylat, Urethanacrylat mit reaktiven Isocyanatgruppen, und OH-funktionales Acrylat im stöchiometrischen Verhältnis zu den freien Isocyanatgruppen des additiv reagierenden Anteils an Urethanacrylat, sowie Lösemittel und einem Photoinitiator aufgetragen. Das Lösemittel wird bei ca. 100 °C verdampft, und die Schicht wird unter UV-Licht gehärtet. Auf der so erhaltenen Schicht wird eine Haftprimerschicht aufgetragen. Das so resultierende Transfermaterial wird in einem Pressvorgang bei 140 °C und 30 MPa verpresst. Es kann so ein HPL-Material erzeugt werden, dessen Oberfläche den Glanz- oder Mattgrad der Trägerfolie übernommen hat, das eine hohe Kratzfestigkeit und Abrasivität aufweist und das hervorragenden Witterungsschutz bietet.

DE 10 2007 040 376 A1 betrifft einen Lack, einen flexiblen Schichtverbund mit einem Träger und einer darauf aufgebrachten Lackschicht und die Verwendung dieses Schichtverbundes. Der Lack besteht, neben Photoinitiatoren und Additiven, aus einem Gemisch aus drei Komponenten, nämlich aus einem festen, doppelbindungshaltigen Polyol-Bindemittel (A), aus einem festen, NCO-Gruppen-haltigen Urethanacrylat-Bindemittel (B) und aus einem festen Urethanacrylat-Bindemittel (C). Nach einem Beispiel wird eine Lackzusammensetzung dieser Art auf eine PET-Folie aufgetragen. Der so gebildete Schichtverbund wird zuerst bei Raumtemperatur getrocknet und dann im Ofen bei 100 °C gehärtet. Das so erhaltene Transferlaminat wird lackseitig an ein vorher mit einer dünnen PU-Klebeschicht versehenes Aluminiumprofil unter leichtem Druck angelegt. Nach einer UV-Härtung mit einem Hg-Kaltlichtstrahler (1000 bis 7000 mJ/cm²) ließ sich PET-Folie problemlos von dem nun lackierten Aluminiumprofil abziehen.

WO 2017/109118 A1 beschreibt eine Schichtpressstoffplatte mit einer Oberflächenlage an mindestens einer Plattenoberfläche, die als äußerste Schicht eine Beschichtung mit einem vernetzten Polyurethan(meth)acrylat-Polymer aufweist, und die sich durch eine ausgezeichnete Kratzfestigkeit und Witterungsbeständigkeit auszeichnet. Ferner wird ein Verfahren zur Herstellung von Polyurethan(meth)acrylat-beschichteten Schichtpressstoffplatten bereit gestellt, bei welchem die Lackzusammensetzung unmittelbar als Beschichtung auf ein Oberflächenmaterial für eine Schichtpressstoffplatte aufgetragen wird.

In Anbetracht des oben Angeführten, war es die Aufgabe der vorliegenden Erfindung, ein flexibel anwendbares, kostengünstiges und für die Massenproduktion geeignetes Verfahren zur Ausbildung von beschichteten Substraten, insbesondere von beschichteten Schichtpressstoffplatten (unter anderem von HPL-Platten "high-pressure-laminates" und CPL Platten "continuous-pressure-laminates), bereitzustellen. Ferner war es die Aufgabe der vorliegenden Erfindung, eine geeignete Transferfolie bereitzustellen, mit der eine Beschichtung auf einfache Weise während der Plattenherstellung (Verpressung) aufgebracht werden kann. Insbesondere war es die Aufgabe der Erfindung, eine Transferfolie bereitzustellen, die eine verbesserte Kratzfestigkeit, bessere Chemikalienbeständigkeit und/oder eine verbesserte Bewitterungsstabilität bietet. Insbesondere war es eine weitere Aufgabe der Erfindung, dass das Trägermaterial der Transferfolie als Schutz für die Plattenoberfläche bis zum letzten Verarbeitungsschritt (Plattenzuschnitt) auf der Platte verbleiben, die Platte also inklusive des darauf befindlichen Trägermaterials verarbeitet (zugeschnitten) werden kann

Es wurde überraschend festgestellt, dass das erfindungsgemäße Verfahren, die dadurch erhältliche Transferfolie sowie die dadurch herstellbaren Transferbeschichtungen zumindest eine der oben aufgeführten Aufgaben erfüllen.

In einem ersten Aspekt betrifft die vorliegende Erfindung ein Verfahren zur Herstellung einer Transferfolie, umfassend ein Trägermaterial und eine Beschichtung, die ein thermoplastisches Polyurethan(meth)acrylat-Polymer umfasst, wobei das Verfahren die folgenden Schritte umfasst:
a) Auftragen einer Lackzusammensetzung auf ein Trägermaterial, wobei die Lackzusammensetzung eine Harzkomponente und eine Härterkomponente umfasst,
   wobei die Harzkomponente als Gemisch vorliegt, das mindestens eine Komponente A und mindestens eine Komponente B umfasst, wobei
   die Komponente A eine polymerisierbare (Meth)acrylatverbindung ist, die pro Molekül mindestens 2 Gruppen mit einer (meth)acrylischen Doppelbindung und keine Hydroxygruppen aufweist, und
   die Komponente B eine polymerisierbare (Meth)acrylatverbindung ist, die pro Molekül eine oder mehrere Gruppen mit einer (meth)acrylischen Doppelbindung und mindestens 2 Hydroxygruppen aufweist;
b) Trocknen des im Schritt a) beschichteten Trägermaterials bei einer erhöhten Temperatur, bei der eine Reaktion der Hydroxygruppen in der Harzkomponente mit den Isocyanatgruppen der Härterkomponente stattfindet, so dass sich eine Beschichtung bildet, welche das thermoplastische Polyurethan(meth)acrylat-Polymer umfasst, das Gruppen mit (meth)acrylischen Doppelbindungen aufweist.

Bei der Beschichtung handelt es sich somit um eine transferierbare Beschichtung. Der Begriff *"thermoplastisch"* ist dem Fachmann geläufig und bezeichnet polymere Werkstoffe, die bei erhöhter Temperatur verformbar sind und sich infolgedessen unter Anwendung thermoplastischer Verarbeitungsverfahren, wie beispielsweise Extrusion und/oder Spritzguss, verarbeiten lassen. Das im Verfahrensschritt (b) gebildete thermoplastische Polyurethan(meth)acrylat-Polymer weist Polymerketten auf, die im Wesentlichen nicht vernetzt sind. Die in Schritt (b) erhaltene Beschichtung ist im Wesentlichen bei Raumtemperatur nicht klebrig und weist bei dieser Temperatur eine Lagerstabilität über einen Zeitraum von mehreren Wochen auf, wodurch eine Zwischenlagerung und ein Transport sowie eine einfache Handhabe bei der Weiterverarbeitung ermöglicht werden. Im Rahmen einer späteren Anwendung, insbesondere bei der Herstellung einer Schichtpressstoffplatte (vgl. unten), erfolgt eine thermische Behandlung bei Temperaturen im Bereich von 100 °C bis 210 °C, und hohem Druck wobei eine Polymerschmelze mit hervorragenden Hafteigenschaften gebildet wird, die eine besonders feste Anbindung an das jeweilige Substrat gewährleistet.

In einem zweiten Aspekt betrifft die vorliegende Erfindung eine Transferfolie, umfassend ein Trägermaterial und eine Beschichtung, wobei die Beschichtung ein thermoplastisches Polyurethan(meth)acrylat-Polymer umfasst, und die Transferfolie nach dem erfindungsgemäßen Verfahren erhältlich ist.

In einem dritten Aspekt betrifft die vorliegende Erfindung ein Verfahren zur Herstellung einer Schichtpressstoffplatte umfassend
ein Trägermaterial,
eine Beschichtung, welche ein vernetztes Polyurethan(meth)acrylat-Polymer umfasst, und
eine Kernlage,
wobei die Schichtpressstoffplatte als äußerste Schicht das Trägermaterial aufweist und die Beschichtung zwischen dem Trägermaterial und der Kernlage angeordnet ist; und
wobei das Verfahren die folgenden Schritte umfasst:
   i) Bereitstellen einer Transferfolie, umfassend ein Trägermaterial und eine Beschichtung, die ein thermoplastisches Polyurethan(meth)acrylat-Polymer umfasst;
   ii) Bereitstellen eines Pressstapels, der ein Material zum Bilden einer Kernlage einer Schichtpressstoffplatte und der im Schritt i) bereitgestellten Transferfolie als Oberflächenlage umfasst, so dass zumindest auf einer Seite des Pressstapels die im Schritt i) bereitgestellte Transferfolie die äußerste Lage bildet, und wobei das Trägermaterial auf der Oberfläche des Pressstapels vorliegt;
   ii) Verpressen des Pressstapels bei erhöhtem Druck und Temperatur, wobei in der Beschichtung eine Polymerisation der (meth)acrylischen Doppelbindungen des thermoplastischen Polyurethan-Polymers stattfindet.

In einem vierten Aspekt betrifft die vorliegende Erfindung eine Schichtpressstoffplatte, welche
ein Trägermaterial,
eine Beschichtung umfassend ein vernetztes Polyurethan(meth)acrylat-Polymer, und
eine Kernlage,
umfasst, wobei die Schichtpressstoffplatte als äußerste Schicht das Trägermaterial aufweist und die Beschichtung zwischen dem Trägermaterial und der Kernlage angeordnet ist,
und nach dem erfindungsgemäßen Verfahren erhältlich ist, wobei die Beschichtung vorzugweise eine Kratzfestigkeit gemäß EN 438-2:2019, Abschnitt 25, von einem Prüfwert von ≥ 6 N aufweist.

Zudem verfügt die erhaltene Schichtpressstoffplattenoberfläche vorzugsweise über eine Bewitterungsbeständigkeit gemäß EN 438-2:2019, Abschnitt 29, bei der nach über 3000 Stunden die Änderung des Glanzgrades (gemessen nach DIN EN ISO 2813:2015-02) bei einem Winkel von 60° höchstens 3 Glanzeinheiten beträgt. Zusätzlich liegt eine Farbstabilität gemäß Graumaßstab EN 20105-A02 in Grad 5 vor (keine Veränderung) und/oder eine Fleckenempfindlichkeit gemäß EN 438-2:2019, Abschnitt 26, bei der die Oberfläche mindestens Grad 5 erreicht. Darüber hinaus zeigt die Beschichtung hervorragende optische Eigenschaften gemäß EN 438-2:2019, Abschnitt 14 und 15 Grad 5. (keine Veränderung). Bei anschließender Haftungsprüfung mittels Gittterschnitt gemäß ISO 2400 zeigt die Beschichtung sehr gute Haftungseigenschaften und Prüfwerte von Gt 0-1.

Schließlich, in einem fünften Aspekt betrifft die vorliegende Erfindung ein Verfahren zur Herstellung eines Bauteils, wobei das Verfahren die folgenden Schritte i) bis iv) umfasst:
i) Bereitstellen einer Schichtpressstoffplatte wie vorstehend beschrieben;
ii) optional, Verarbeiten der Schichtpressstoffplatte;
iii) Montage der Schichtpressstoffplatte aus dem Schritt i) oder ii);
iv) Entfernung des Trägermaterials.

Die im Schritt a) des erfindungsgemäßen Verfahrens aufgetragene Lackzusammensetzung umfasst eine Harzkomponente, eine Härterkomponente, sowie optionale Zusatzstoffe.

Die Harzkomponente ist ein Gemisch, welches mindestens eine Komponente A und mindestens eine Komponente B umfasst. Neben den Komponenten A und B kann die Harzkomponente noch weitere Monomer- oder Polymerbestandteile, Haftvermittler und/oder Lösungsmittel enthalten.

### Komponente A

Bei der Komponente A handelt es sich um eine polymerisierbare (Meth)acrylatverbindung, die pro Molekül mindestens 2 Gruppen mit einer (meth)acrylischen Doppelbindung und keine Hydroxygruppen aufweist. Die Komponente A kann von einem einzelnen Typ einer solchen polymerisierbaren (Meth)acrylatverbindung gebildet werden oder sie kann mehrere unterschiedliche Typen solcher Verbindungen enthalten.

Wie dem Fachmann geläufig ist, wird der Ausdruck *"(Meth)acryl*" bzw. *"(Meth)acrylat"* als Kurzschreibweise für Methacryl oder Acryl bzw. Methacrylat oder Acrylat verwendet. Daher umfasst der Begriff *"(Meth)acrylatverbindung"* als Sammelbezeichnung sowohl Verbindungen mit Acrylestergruppen CH₂=CH-C(O)-O- als Gruppen mit einer (meth)acrylischen Doppelbindung als auch Verbindungen mit Methacrylestergruppen CH₂=CCH₃-C(O)-O- als Gruppen mit einer (meth)acrylischen Doppelbindung. Bevorzugt sind die Gruppen mit einer (meth)acrylischen Doppelbindung der Verbindungen der Komponente A Acrylestergruppen. Die Zahl der Gruppen mit einer (meth)acrylischen Doppelbindung, bevorzugt Acrylestergruppen, pro Molekül beträgt mindestens 2, bevorzugt 2 bis 18, besonders bevorzugt 2 bis 10, und insbesondere bevorzugt 4 bis 8.

Darüber hinaus enthalten die Verbindungen der Komponente A in Abgrenzung zu den Verbindungen der nachstehend definierten Komponente B keine Hydroxygruppen. Bevorzugt sind die Verbindungen der Komponente A darüber hinaus frei von -SH und -NH₂ Gruppen. Besonders bevorzugt als Verbindungen der Komponente A sind solche Verbindungen, die neben den mindestens 2 Gruppen mit einer (meth)acrylischen Doppelbindung keine weiteren reaktiven Gruppen aufweisen. Wie für den Fachmann leicht erkennbar ist, bezieht sich der Begriff der *"reaktiven Gruppe"* dabei auf mögliche Reaktionen zwischen Bestandteilen der Lackzusammensetzung, d.h. in diesen besonders bevorzugten Verbindungen der Komponente A sind die mindestens 2 Gruppen mit einer (meth)acrylischen Doppelbindung, bevorzugt mindestens 2 Acrylestergruppen die einzigen Gruppen, die dazu in der Lage sind, mit anderen Bestandteilen der Lackzusammensetzung unter Ausbildung einer kovalenten Bindung zu reagieren. Wie für den Fachmann ebenfalls verständlich ist, gilt dies insbesondere unter den Bedingungen, denen die Lackzusammensetzung im Lauf der erfindungsgemäßen Verfahren ausgesetzt ist.

Bevorzugt umfasst die Komponente A Verbindungen, welche aus den Formeln A1 und A2 ausgewählt sind, stärker bevorzugt ein Gemisch der Verbindungen der Formeln A1 und A2. Besonders bevorzugt besteht die Komponente A aus Verbindungen der Formeln A1 und A2. 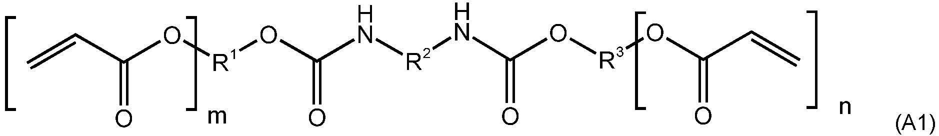 worin
- R¹ und R³: jeweils unabhängig voneinander ausgewählt sind aus einer aliphatischen Kohlenwasserstoffgruppe, einer aliphatischen Polyethergruppe und einer aliphatischen Polyestergruppe,
- R²: eine aliphatische oder cycloaliphatische Kohlenwasserstoffgruppe ist, und
- n und m: jeweils unabhängig voneinander 2 bis 9, bevorzugt 2 bis 4 ist.

Wie sich aus der Formel A1 erkennen lässt, sind dabei m Acrylestergruppen H₂C=CH-C(O)-O- jeweils über eine Esterbindung an die Gruppe R¹ und n Acrylestergruppen an die Gruppe R³ gebunden.

Vorzugsweise sind R¹ und R³ unabhängig voneinander ausgewählt aus linearen oder verzweigten, bevorzugt verzweigten Alkylgruppen, besonders bevorzugt aus Alkylgruppen mit 3 bis 10, stärker bevorzugt 3 bis 6 C-Atomen. R² ist vorzugsweise eine Alkylgruppe, die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

Soweit nicht anders angegeben, beschränken sich die Begriffe *"Alkyl"* oder *"Alkylgruppe"* im Rahmen dieser Beschreibung nicht auf einwertige gesättigte Kohlenwasserstoffgruppen, sondern können, wie aus dem jeweiligen Kontext ersichtlich, auch Gruppen mit einer höheren Anzahl an Valenzen umfassen. Wie es sich z.B. aus der Formel A1 ergibt, stellt z.B. R¹ in seiner bevorzugten Form als Alkylrest in der Formel A1 m+1 Valenzen zur Anbindung an Nachbargruppen bereit. Dies gilt entsprechend auch für andere Bestandteile der Lackzusammensetzung. 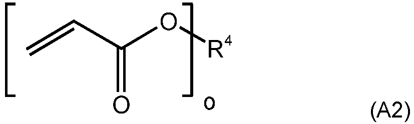 worin
- R⁴: eine aliphatische Kohlenwasserstoffgruppe ist, und
- o: 2 bis 6, bevorzugt 3-5 ist.

Vorzugsweise ist R⁴ eine lineare oder verzweigte, bevorzugt verzweigte, Alkylgruppe, besonders bevorzugt eine Alkylgruppe mit 3 bis 10, stärker bevorzugt 3 bis 6 C-Atomen.

Vorzugsweise beträgt die Doppelbindungsdichte der Komponente A 3,0 mol/kg bis 12,0 mol/kg, bevorzugter 4,0 mol/kg bis 12,0 mol/kg, besonders bevorzugt 4,0 mol/kg bis 11,0 mol/kg.

### Komponente B

Bei der Komponente B handelt es sich um eine polymerisierbare (Meth)acrylatverbindung, die pro Molekül sowohl eine oder mehrere Gruppen mit einer (meth)acrylischen Doppelbindung als auch mindestens 2 Hydroxygruppen aufweist. Die Komponente B kann von einem einzelnen Typ einer solchen polymerisierbaren (Meth)acrylatverbindung gebildet werden, oder sie kann mehrere unterschiedliche Typen solcher Verbindungen enthalten.

Bevorzugt sind die Gruppen mit einer (meth)acrylischen Doppelbindung der Verbindungen der Komponente B Acrylestergruppen. Die Zahl der Gruppen mit einer (meth)acrylischen Doppelbindung, bevorzugt Acrylestergruppen, pro Molekül beträgt mindestens 2, bevorzugt 2 bis 9, besonders bevorzugt 2 bis 4. Darüber hinaus enthalten die Verbindungen der Komponente B mindestens 2 Hydroxygruppen, bevorzugt 2 bis 5, besonders bevorzugt 2. Bei den Hydroxygruppen handelt es sich in der Regel um alkoholische Hydroxygruppen.

Vorzugsweise umfasst die Komponente B Verbindungen der Formel B1, und besonders bevorzugt besteht sie aus Verbindungen der Formel B1: 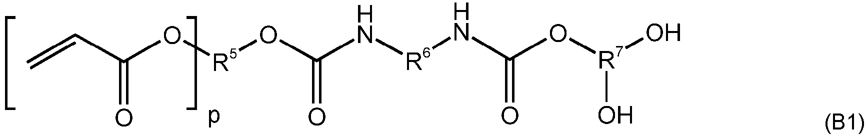 worin
- R⁵: ausgewählt ist aus einer aliphatischen Kohlenwasserstoffgruppe, einer aliphatischen Polyethergruppe und einer aliphatischen Polyestergruppe,
- R⁶ und R⁷: jeweils unabhängig voneinander ein aliphatischer oder cycloaliphatischer Kohlenwasserstoffrest sind, und
- p: 2 bis 9, bevorzugt 2 bis 4 ist.

Wie sich aus der Formel B1 erkennen lässt, sind dabei p Acrylestergruppen H₂C=CH-C(O)-O- jeweils über eine Esterbindung an die Gruppe R⁵ und 2 Hydroxygruppen an die Gruppe R⁷ gebunden.

Vorzugsweise ist R⁵ eine lineare oder verzweigte, bevorzugt eine verzweigte Alkylgruppe, besonders bevorzugt eine Alkylgruppe mit 3 bis 10, stärker bevorzugt 3 bis 6 C-Atomen. R⁶ ist vorzugsweise eine Alkylgruppe, die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. R⁷ ist vorzugsweise eine Alkylgruppe, die offenkettig (d.h. linear oder verzweigt) oder cyclisch sein kann oder in der offenkettige oder verzweigte Einheiten kombiniert sein können, besonders bevorzugt eine lineare oder verzweigte Alkylgruppe mit 3 bis 20, stärker bevorzugt 3 bis 10 C-Atomen.

Vorzugsweise beträgt die Doppelbindungsdichte der Komponente B 1,0 mol/kg bis 8,0 mol/kg, bevorzugter 2,0 mol/kg bis 6,0 mol/kg, besonders bevorzugt 3,0 mol/kg bis 5,0 mol/kg.

Die Hydroxylgruppenkonzentration der Komponente B beträgt vorzugsweise: 1,0 bis 5,0 mol/kg, bevorzugter 2,0 bis 4,0 mol/kg, besonders bevorzugt 2,5 bis 3,5 mol/kg.

Die Urethangruppenkonzentration der Komponente B beträgt vorzugsweise: 1,0 bis 5,0 mol/kg, bevorzugter 2,0 bis 4,0 mol/kg, besonders bevorzugt 2,5 bis 3,5 mol/kg.

### Komponente C

Ferner kann die erfindungsgemäß eingesetzte Harzkomponente mindestens eine Komponente C umfassen, welche ein Polyurethan-Präpolymer ist, das pro Molekül mindestens 2 Hydroxygruppen, vorzugsweise genau 2 Hydroxygruppen und keine Isocyanatgruppen aufweist.

Die Komponente C ist ein Polyurethan-Präpolymer, das pro Molekül mindestens 2 Hydroxygruppen und keine Isocyanatgruppen aufweist. Wie für den Fachmann ersichtlich, handelt es sich bei den Hydroxygruppen generell um alkoholische Hydroxygruppen. Das Polyurethan-Präpolymer kann linear oder verzweigt sein. Es wird vorzugsweise gebildet aus einem Polyisocyanat mit 2 bis 4, bevorzugt 2 Isocyanatgruppen, und einem Polyalkohol mit 2 bis 4, vorzugsweise 2 oder 3 alkoholischen Hydroxygruppen. Bei dem Polyisocyanat und dem Polyalkohol handelt es sich bevorzugt um aliphatische Verbindungen. Die Anzahl der Untereinheiten im Polyurethan-Präpolymer, die aus dem Polyisocyanat gebildet werden, und die Anzahl der Untereinheiten, die aus dem Polyalkohol gebildet werden, beträgt vorzugsweise jeweils 2 bis 20, bevorzugt 2 bis 9. Die Anzahl der Hydroxygruppen pro Molekül des Polyurethan-Präpolymers beträgt mindestens 2, bevorzugt 2 bis 5, besonders bevorzugt 2 bis 3, beispielsweise 2.

Das Polyurethan-Präpolymer der Komponente C enthält keine Isocyanatgruppen. Bevorzugt als Komponente C sind solche Polyurethan-Präpolymere, die neben den mindestens 2 Hydroxygruppen keine weiteren reaktiven Gruppen aufweisen. Wie für den Fachmann erkennbar, bezieht sich der Begriff der *"reaktiven Gruppe"* dabei auf mögliche Reaktionen zwischen Bestandteilen der Lackzusammensetzung, d.h. in diesen bevorzugten Polyurethan-Präpolymeren der Komponente C sind die mindestens 2 Hydroxygruppen die einzigen Gruppen, die dazu in der Lage sind, mit anderen Bestandteilen der Lackzusammensetzung unter Ausbildung einer kovalenten Bindung zu reagieren. Wie für den Fachmann ebenfalls verständlich ist, gilt dies insbesondere unter den Bedingungen, denen die Lackzusammensetzung im Lauf der erfindungsgemäßen Verfahren ausgesetzt ist.

Bevorzugt umfasst die Komponente C mindestens eine Verbindung der Formel C1 und, optional, mindestens eine Verbindung der Formel C2. Besonders bevorzugt besteht die Komponente C aus Polyurethan-Präpolymeren, welche aus den Verbindungen der Formeln C1 und C2 ausgewählt sind. Kombinationen aus Verbindungen C1 und C2 sind bevorzugt. 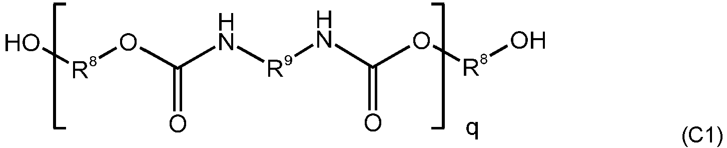 worin
- R⁸: unabhängig voneinander bei jedem Auftreten ausgewählt sind aus einer aliphatischen Kohlenwasserstoffgruppe, die mit einer oder mehreren Hydroxygruppen substituiert sein kann, einer aliphatischen Polyethergruppe und einer aliphatischen Polyestergruppe,
- R⁹: unabhängig voneinander bei jedem Auftreten eine aliphatische oder cycloaliphatische Kohlenwasserstoffgruppe ist, und
- q: 2 bis 9 ist.

Es ist bevorzugt, dass alle Gruppen R⁸ gleich sind und alle Gruppen R⁹ gleich sind. Vorzugsweise ist R⁸ eine lineare oder verzweigte, bevorzugt verzweigte, Alkylgruppe, besonders bevorzugt eine Alkylgruppe mit 3 bis 10, stärker bevorzugt mit 3 bis 6 C-Atomen. Auch die Alkylgruppe R⁹ kann mit einer oder mehreren Hydroxygruppen substituiert sein, beispielsweise mit 0, 1 oder 2 solcher Hydroxysubstituenten. R⁹ ist vorzugsweise eine Alkylgruppe, die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. 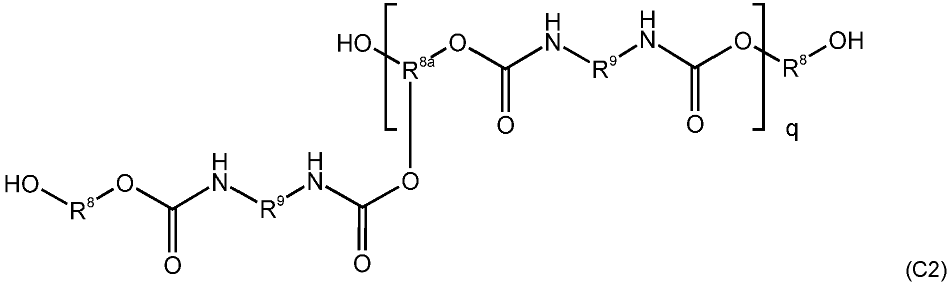 worin
- R⁸ und R^{8a}: unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe,
- R⁹: unabhängig voneinander bei jedem Auftreten eine aliphatische oder cycloaliphatische Kohlenwasserstoffgruppe ist, und
- q: 2 bis 9 ist

Für die Formel C2 ist bevorzugt, dass alle Gruppen R⁸ und R^{8a} gleich sind und alle Gruppen R⁹ gleich sind. Vorzugsweise ist R⁸ und R^{8a} jeweils eine lineare oder verzweigte, bevorzugt verzweigte Alkylgruppe, besonders bevorzugt eine Alkylgruppe mit 3 bis 10, stärker bevorzugt 3 bis 6 C-Atomen. Auch die Alkylgruppen R⁸ und R^{8a} können mit einer oder mehreren Hydroxygruppen substituiert sein. Bevorzugt liegen in R⁸ 1 oder 2 Hydroxysubstituenten vor, und in R^{8a} 0 oder 1 Hydroxysubstituent. R⁹ ist vorzugsweise eine Alkylgruppe, die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

### Haftvermittler

Zur Verbesserung der Haftung der Beschichtung auf der Kernlage der Schichtpressstoffplatte kann die Harzkomponente einen oder mehrere Haftvermittler umfassen.

Geeignete Haftvermittler umfassen insbesondere Verbindungen, die sowohl mit der Beschichtung als auch mit der Kernlage der Schichtpressstoffplatte wechselwirken können. Als Kernlagen für Schichtpressstoffplatten werden üblicherweise faserverstärkte Phenol- und Aminoplastharze bzw. damit getränkte und zwischengetrocknete Papiere oder damit hergestellte zwischengetrocknete Faserbreie oder Faserplatten eingesetzt. Kernlagen sowie der Aufbau von Schichtpressstoffplatten sind dem Fachmann und dem Stand der Technik seit vielen Jahrzehnten bekannt und nach DIN EN 438, ISO 4586, NEMA LD3 und JIS K 6902 normiert. Demnach werden erfindungsgemäß bevorzugt Haftvermittler eingebracht, die bevorzugt sowohl mit der Beschichtung als auch mit Phenol- und Aminoplastharzen wechselwirken können.

Geeignete Haftvermittler umfassen monomere, oligomere und polymere Haftvermittler gleichermaßen. Beispiele für monomere und oligomere Haftvermittler sind Epoxid- oder Oxethan-funktionelle Verbindungen wie Glycidylether, Epoxid- oder Oxethan-funktionelle Alkohole, (Meth)acrylatfunkionelle Alkohole wie zum Beispiel Hydroxyethylacrylat (HEA), Hydroxyethylmethacrylat (HEMA), Hydroxypropylmethacrylat (HPMA), Pentaerythritoltriacrylat (PETIA), Glycidyl(meth)acrylat, Stoffe und Stoffgemische die durch Synthese aus Epoxid- oder Oxethan-funktionellen Alkoholen durch Reaktion mit aliphatischen oder cycloaliphatischen Diisocyanaten und (Meth)acrylatfunktionellen aliphatischen verzweigten und unverzweigten Alkoholen erhalten werden können. Glycidylether sind besonders bevorzugt und beispielsweise unter Produktnamen GE 100 und GE 500 von Raschig GmbH kommerziell erhältlich.

Weitere geeignete Haftvermittler sind Maleinsäurederivate, wie Maleinsäure, Maleinsäureanhydrid (MSA), Methylmaleinsäureanhydrid, Maleinimid, N-Methylmaleinimid, Maleinsäureamide (MSA), N-Phenylmaleinimid und N-Cyclohexylmaleinimid, Fumarsäurederivate, Methacrylsäureanhydrid sowie Acrylsäureanhydrid. Bei der Verwendung von hydroxylgruppenhaltigen Haftvermittlern ist eine mögliche Reaktion der Hydroxylgruppen mit den Isocyanatgruppen der Härterkomponente (vgl. unten) insofern zu berücksichtigen, dass die die Menge der Härterkomponente entsprechend erhöht werden soll, damit die erhaltene Beschichtung nach Trocknung im Wesentlichen nicht klebrig ist.

Ferner als Haftvermittler geeignet sind Organosilane mit folgender Struktur:

(RO)₃-Si-R'-X

worin
- R: eine aliphatische Kohlenwasserstoffgruppe ist, bevorzugt eine Alkylgruppe oder eine Acylgruppe mit 1 bis 10, stärker bevorzugt 1 bis 6 C-Atomen, besonders bevorzugt Methyl, Ethyl oder Acetyl;
- R': eine aliphatische Kohlenwasserstoffgruppe ist, bevorzugt eine Alkylengruppe mit 1 bis 10, stärker bevorzugt 1 bis 6 C-Atomen; und
- X: eine Aminogruppe, eine Epoxygruppe oder eine (Meth)acrylat-gruppe umfasst.

Wie für den Fachmann ersichtlich, handelt es sich bei der Gruppe RO um eine hydrolysierbare Gruppe, typischerweise Methoxy, Ethoxy oder Acetoxy, welche mit Wasser zu einer Silanol-Gruppe (Si-OH) reagieren kann und diese schließlich eine Verbindung mit den Komponenten der Beschichtung und/oder dem Harz der benachbarten Lage des Pressstapels eingeht. Die Gruppe X kann ebenfalls mit Komponenten der Beschichtung und/oder dem Harz der benachbarten Lage des Pressstapels reagieren. Entsprechende Haftvermittler sind kommerziell erhältlich, beispielsweise als Dynasylan^{®} von Evonik Operations GmbH.

In einer weiteren Ausführungsform kann es sich bei dem Haftvermittler um ein Acrylharz, bestehend aus Monomeren mit reaktiven Gruppen handeln. Beispiele für geeignete reaktive Gruppen umfassen Hydroxylgruppen, Carboxylgruppen, Aminogruppen, Amidgruppen, Säureanhydridgruppen, Imidgruppen und Epoxygruppen. Das Acrylharz kann eine oder mehrere dieser reaktiven Gruppen aufweisen. Beispiele für Monomere mit reaktiven Gruppen sind: Monomere mit Hydroxylgruppen, wie (Meth)acrylsäurehydroxyalkylester, Monomere mit Carboxylgruppen, wie (Meth)acrylsäure, (Meth)acryloyloxyalkylcarbonsäuren oder aromatische (Meth)acryloyloxycarbonsäuren, Monomere mit Aminogruppen, wie (Meth)acrylsäure-aminoalkylester, Monomere mit Amidgruppen, wie (Meth)acrylsäurealkylamidalkylester, Säureanhydridmonomere, wie Maleinsäureanhydrid, Maleimidmonomere, wie Maleimid oder Alkylmaleimid, sowie Monomere mit Epoxidgruppen, wie Glycidyl(meth)acrylat.

In einer weiteren Ausführungsform kann es sich bei dem Haftvermittler um ein Polyesterharz mit reaktiven Gruppen handeln. Beispiele für geeignete reaktive Gruppen umfassen Hydroxylgruppen, Carboxylgruppen, Aminogruppen, Amidgruppen, Säureanhydridgruppen, Imidgruppen und Epoxygruppen, ionische Gruppen wie Alkylammoniumgruppen. Geeignete Polyesterharze mit reaktiven Gruppen sind kommerziell von BYK-Chemie GmbH und Worlée-Chemie GmbH erhältlich.

In einer weiteren Ausführungsform kann es sich bei dem Haftvermittler um veretherte oder teilveretherte Aminoplastharze, bevorzugt veretherte oder teilveretherte Melamin-Formaldehydharz (MF-Harze) handeln. Beispiele sind: n-butylierte-, isobutylierte- und Methylierte MF-Harze. Diese sind unter dem Namen Maprenal^{®} und Resimene^{®} von Prefere Resins Holding GmbH erhältlich.

In einer weiteren Ausführungsform kann es sich bei dem Haftvermittler um Derivate der Isocyanate handeln, bei denen die Isocyanatgruppen in ihrer Reaktivität bei Raumtemperatur bis 120 °C blockiert sind. Es kann sich dabei um Isocyanurat-, Biuret-, Allophanat-, Iminooxadiazindion-, Urethan-, Harnstoff-, Carbodiimid- und/oder Uretdiongruppen aufweisende Polyisocyanate handeln. Diese können in üblicher und bekannter Weise aus den nachfolgend unter (i) beschriebenen Diisocyanaten hergestellt werden. Entsprechende Produkte sind dem Fachmann bekannt und beispielsweise als Desmodur^{®} BL von Covestro AG kommerziell erhältlich.

Ferner kann die Harzkomponente der Lackzusammensetzung mindestens ein Lösungsmittel enthalten. Als beispielhafte Lösungsmittel können Ester wie Ethylacetat, Butylacetat oder 2-Butoxyethylacetat, aliphatische, cycloaliphatische und aromatische Kohlenwasserstoffe, Alkohole, Glykole, Glykolether oder Ketone genannt werden. Die Gesamtkonzentration der Komponenten A und B sowie, falls vorhanden, der Komponenten C und/oder der Haftvermittler kann 50 Gew.-% bis 100 Gew.-%, bezogen auf das Gesamtgewicht der Lackzusammensetzung, betragen.

Zur Herstellung der Harzkomponente der Lackzusammensetzung können die Komponenten A und B, sowie, falls anwesend, die Komponente C und/oder der Haftvermittler bereitgestellt und vermischt werden. Alternativ können z.B. insbesondere zur Bereitstellung der Komponenten A (wie z.B. die Verbindung der Formeln A1), B und C auch Ausgangsprodukte wie Polyole, Polyisocyanate und/oder gemischt-funktionelle Verbindungen, wie ein Polyacrylat mit einer oder mehreren Hydroxylgruppen gemischt werden, aus denen die Komponenten A, B und falls vorhanden C im Rahmen einer Synthese der Harzkomponente hergestellt werden. Beispielsweise kann die Harzkomponente durch eine ein- oder mehrstufige Synthese bei Temperaturen von 30 bis 130 °C hergestellt werden.

In der Harzkomponente liegt die Komponente A bevorzugt in einer Menge von 30,0 bis 80,0 Gew.-%, die Komponente B in einer Menge von 15,0 bis 70,0 Gew.-%, die Komponente C in einer Menge von 0,0 bis 5,0 Gew.-% und der Haftvermittler in einer Menge von 0,0 bis 10,0 Gew.-%, bezogen auf das Gesamtgewicht der Komponenten A bis C und Haftvermittler vor. Die Summe der Komponenten beträgt dabei 100 Gew.%.

In einer stärker bevorzugten Ausführungsform enthält die Harzkomponente die Komponente der Formel A1 in einer Menge von 15,0 bis 45,0 Gew.-%, die Komponente der Formel A2 in einer Menge von 15,0 bis 45,0 Gew.-% (wobei die Gesamtmenge von A1 und A2 30,0 bis 80,0 Gew.-% beträgt), die Komponente der Formel B1 in einer Menge von 15,0 bis 70,0 Gew.-%. Die Komponenten C1 und C2, falls anwesend, liegen in einer Gesamtmenge von 0,0 bis 5,0 Gew.-% und der Haftvermittler in einer Menge von 0,0 bis 9,0 Gew.-% vor. Die Summe der Komponenten beträgt dabei wiederum 100 Gew.-%.

In einer noch stärker bevorzugten Ausführungsform enthält die Harzkomponente die Komponente der Formel A1 in einer Menge von 15,0 bis 40,0 Gew.-%, die Komponente der Formel A2 in einer Menge von 15,0 bis 40,0 Gew.-% (wobei die Gesamtmenge von A1 und A2 30,0 bis 80,0 Gew.-% beträgt), die Komponente der Formel B1 in einer Menge von 25,0 bis 60,0 Gew.-%, die Komponenten C1 und C2, falls anwesend, in einer Gesamtmenge von 0,0 bis 3,0 Gew.-% und den Haftvermittler in einer Menge von 0,0 bis 8,0 Gew.-%. Die Summe der Komponenten beträgt dabei wiederum 100 Gew.-%.

### Härterkomponente

Neben der Harzkomponente enthält die Lackzusammensetzung eine Härterkomponente, bei der es sich um ein mindestens difunktionelles Isocyanat handelt. Bevorzugt enthält das Isocyanat der Härterkomponente 2 bis 4 Isocyanatgruppen. Die Isocyanatgruppen können optional in ihrer Reaktivität bei Raumtemperatur blockiert sein.

Bevorzugte Beispiele für die Härterkomponente sind die folgenden (i) bis (iii):
(i) Ein Isocyanat der Formel R¹¹-[-N=C=O]ₛ kann zum Einsatz kommen, wobei s 2 bis 4,
bevorzugt 2 oder 3 ist, und R¹¹ eine aliphatische oder cycloaliphatische Kohlenwasserstoffgruppe ist, bevorzugt eine Alkylgruppe, die offenkettig (d.h. linear oder verzweigt) oder cyclisch sein kann, oder in der offenkettige oder verzweigte Einheiten kombiniert sein können, besonders bevorzugt eine Alkylgruppe mit 3 bis 20, stärker bevorzugt 3 bis 12 C-Atomen.

Beispiele geeigneter Isocyanate sind Isophorondiisocyanat (5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2- (3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat, Methylpentyldiisocyanat (MPDI), Nonantriisocyanat (NTI) oder Diisocyanate, abgeleitet von Dimerfettsäuren, wie in WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)-cyclohexan, 1,2-, 1,4- oder 1,3-Bis(2-isocyanatoeth-1-yl)-cyclohexan, 1,3-Bis (3-isocyanatoprop-1-yl)-cyclohexan, 1,2-, 1,4- oder 1,3-Bis(4-isocyanatobut-1-yl)-cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A1, GB 1220717 A1, DE 16 18 795 A1 oder DE 17 93 785 A 1 beschrieben wird, bevorzugt Isophorondiisocyanat, 5-Isocyanato-1-(2-isocyanatoeth-1-yl)-1,3,3-trimethyl-cyclohexan, 5-Isocyanato-1- (3-isocyanatoprop-1-yl)-1,3,3-trimethylcyclohexan, 5-Isocyanato- (4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)-cyclohexan, 1-Isocyanato-2-(4-isocyanatobut-1-yl)-cyclohexan oder HDI, insbesondere HDI.
(ii) Ein Oligomer, z.B. ein Dimer oder Trimer aus Isocyanaten der unter (i) angegebenen Formel. Ein bevorzugtes Beispiel für ein solches Oligomer ist das Trimer des Hexamethylendiisocyanats.
(iii) Ein Derivat der unter (i) oder (ii) genannten Isocyanate, bei dem die Isocyanatgruppen in ihrer Reaktivität bei Raumtemperatur blockiert sind. Es kann sich dabei um Isocyanurat-, Biuret-, Allophanat-, Iminooxadiazindion-, Urethan-, Harnstoff-, Carbodiimid- und/oder Uretdiongruppen aufweisende Polyisocyanate handeln, die in üblicher und bekannterweise aus den vorstehend beschriebenen Diisocyanaten hergestellt werden.

Das Mengenverhältnis zwischen Harzkomponente und Härterkomponente in der Lackzusammensetzung (als Verhältnis der Gewichtsteile der Komponenten A+B+C zu Gewichtsteilen Härterkomponente) liegt vorzugsweise im Bereich von 100/20 bis 100/40, besonders bevorzugt 100/25 bis 100/35.

Die Mengen der Komponenten A+B+C zu der Härterkomponente werden dabei bevorzugt so gewählt, dass die Hydroxygruppen der Komponente B in stöchiometrischer Menge in Bezug auf die freien Isocyanatgruppen der Härterkomponente vorliegen.

Zum Bereitsteilen der Lackzusammensetzung werden die Harzkomponente und die Härterkomponente, ggf. zusammen mit den optionalen Zusatzstoffen, vermischt, nach Vermischen der beiden Komponenten liegt die Gebrauchsdauer der Lackzusammensetzung typischerweise im Bereich von einer bis mehreren Stunden, z.B. zwischen 1 und 3 Stunden.

Weitere optionale Zusatzstoffe, die der Lackzusammensetzung zugegeben werden können, sind dem Fachmann bekannt. Beispiele, die einzeln oder als Kombination verwendet werden können, sind Inhibitoren zur Verhinderung einer frühzeitigen Polymerisation der (meth)acrylischen Doppelbindungen, Katalysatoren, Polymerisationsstarter, Lichtschutzmittel, Füllstoffe, Farbstoffe, Pigmente, Additive zur Beeinflussung des Glanzgrades, Additive zur Verbesserung der Benetzung des Trägermaterials, Additive zur Verbesserung der Oberflächenhomogenität, Additive zur Erhöhung der Oberflächenglätte, Additive zur Verringerung der Verblockungsneigung, Lösungsvermittler, Flammschutzmittel, UV-Absorber und Additive zur Verbesserung der Leitfähigkeit.

Zwecks weiterer Erhöhung der Verschleißeigenschaften, insbesondere der Kratzfestigkeit und Abrasivität, können außerdem harte Zuschlagstoffe, wie Korund, Aluminiumoxid und/oder entsprechend gestaltete Nanopartikel in der Lackzusammensetzung enthalten sein. Weiterhin können auch Oberflächenenergie senkende Stoffe eingebaut werden, die auch in Verbindung mit geeigneter mikrostrukturierter Oberfläche einen Lotuseffekt simulieren können.

Vorzugsweise enthält die Lackzusammensetzung als Zusatzstoffe einen oder mehrere Polymerisationsstarter d.h. eine Verbindung, die bei Erhitzen. z.B. bei Erhitzen auf Temperaturen von 130 °C oder mehr Radikale bildet. Ein Beispiel für einen geeigneten Polymerisationsstarter ist tert.-Butylperbenzoat. Die Menge der Zusatzstoffe kann von Fachmann geeignet gewählt werden. Bevorzugt besteht die Lackzusammensetzung aus der Harzkomponente, der Haftvermittlerkomponente und der Härterkomponente in einer Menge von insgesamt mindestens 90 Gew.-%, und den optionalen Zusatzstoffen in einer Menge von höchstens 10 Gew.-%, bezogen auf das Gesamtgewicht der Lackzusammensetzung als 100 Gew.-%. Die Mengenangaben beziehen sich dabei jeweils auf den Feststoffgehalt, d.h. gegebenenfalls vorhandene Lösungsmittel werden nicht einbezogen.

Ferner kann die Lackzusammensetzung einen oder mehrere Lichtstabilisatoren enthalten. Lichtstabilisatoren sind allgemein bekannt und werden beispielhaft in Hans Zweifel, Plastics Additives Handbook, Hanser Verlag, 5. Auflage, 2001, S. 141 ff., ausführlich beschrieben. Lichtstabilisatoren umfassen UV-Absorber, UV-Stabilisatoren und radikalische Fänger.

Geeignete UV-Absorber können beispielhaft aus der Gruppe der substituierten Benzophenone, Salicylsäureester, Zimtsäureester, Oxanilide, Benzoxazinone, Benzotriazole, Triazine oder Benzylidenmalonat stammen, wobei Benzotriazole und Triazine sowie Kombinationen von diesen besonders bevorzugt sind. Die bekanntesten Vertreter der UV-Stabilisatoren sind sterisch gehinderte Amine (hindered amine light stabilizer, HALS).

UV-Absorber vom Benzotriazol-Typ umfassen typischerweise 2-(2'-Hydroxyphenyl)-benzotriazole. Zu den entsprechenden Verbindungen gehören insbesondere 2-(2'-Hydroxy-5'-methylphenyl)-benzotriazol, 2-(3',5'-di-tert-butyl-2'-Hydroxyphenyl)-benzotriazol, 2-(5'-tert-butyl-2'-Hydroxyphenyl)-benzotriazol, 2-(2'-Hydroxy-5'-(1,1,3,3-tetramethylbutyl)phenyl)-benzotriazol, 2-(3',5'-di-tert-butyl-2'-Hydroxyphenyl)-5-chloro-benzotriazol, 2-(3'-tert-butyl-2'-Hydroxy-5'-methylphenyl)-5-chloro-benzotriazol, 2-(3'-sec-butyl-5'-tert-butyl-2'-Hydroxyphenyl)-benzotriazol, 2-(2'-Hydroxy-4'-octyloxyphenyl)-benzotriazol, 2-(3',5'-di-tert-amyl-2'-Hydroxyphenyl)-benzotriazol, 2-(3',5'-bis-(α,α-dimethylbenzyl)-2'-Hydroxyphenyl)-benzotriazol, 2-(3'-tert-butyl-2'-Hydroxy-5'-(2-octyloxycarbonylethyl)phenyl)-5-chloro-benzotriazol, 2-(3'-tert-butyl-5'-[2-(2-ethylhexyloxy)-carbonylethyl]-2'-Hydroxyphenyl)-5-chloro-benzotriazol, 2-(3'-tert-butyl-2'-Hydroxy-5'-(2-methoxycarbonylethyl)phenyl)-5-chloro-benzotriazol, 2-(3'-tert-butyl-2'-Hydroxy-5'-(2-metHoxycarbonylethyl)phenyl)-benzotriazol, 2-(3'-tert-butyl-2'-Hydroxy-5'-(2-octyloxycarbonyl-ethyl)phenyl)-benzotriazol, 2-(3'-tert-butyl-5'-[2-(2-ethylhexyloxy)carbonylethyl]-2'-Hydroxy-phenyl)-benzotriazol, 2-(3'-dodecyl-2'-Hydroxy-5'-methylphenyl)-benzotriazol, 2-(3'-tert-butyl-2'-Hydroxy-5'-(2-isooctyloxy-carbonylethyl)phenylbenzotriazol, 2,2'-methylene-bis[4-(1,1,3,3-tetramethylbutyl)-6-benzotriazole-2-ylphenol]; das Transesterifikationsprodukt von 2-[3'-tert-butyl-5'-(2-methoxycarbonylethyl)-2'-Hydroxyphenyl]-2H-benzotriazol mit Polyethylenglykol 300; [R-CH₂CH₂-COO-CH₂CH₂-, wobei R=3'-tert-butyl-4'-Hydroxy-5'-2H-benzotriazol-2-ylphenyl, 2-[2'-Hydroxy-3'-(α,α-dimethylbenzyl)-5'-(1,1,3,3-tetramethylbutyl)-phenyl]benzotriazol; 2-[2'-Hydroxy-3'-(1,1,3,3-tetramethylbutyl)-5'-(α,α-dimethylbenzyl)-phenyl]benzotriazol. Weitere Beispiele für UV-Absorber vom Benzotriazol-Typ, die verwendet werden können, sind 2-(2-Hydroxy-5-methylphenyl)-benzotriazol, 2-[2-Hydroxy-3,5-di(α,α-dimethylbenzyl)phenyl]benzotriazol, 2-(2-Hydroxy-3,5-di-tert-butylphenyl)-benzotriazol, 2-(2-Hydroxy-3,5-butyl-5-methylphenyl)-5-chlorobenzotriazol, 2-(2-Hydroxy-3,5-di-tert-butylphenyl)-5-chlorobenzotriazol, 2-(2-Hydroxy-3,5-di-tert-amylphenyl)-benzotriazol, 2-(2-Hydroxy-5-tert-butylphenyl)-benzotriazol, 2-(2-Hydroxy-3-sec-butyl-5-tert-butylphenyl)-benzotriazol und 2-(2-Hydroxy-5-tert-octylphenyl)-benzotriazol, Phenol, 2,2'-methylenebis[6-(2H-benzotriazol-2-yl)-4-(1,1,3,3-tetramethylbutyl)]. Diese Verbindungen sind unter anderem kommerziell erhältlich von BASF SE (Ludwigshafen, Deutschland) z.B. als Tinuvin^{®} 360, Tinuvin^{®} 1130 und Tinuvin^{®} 234 und von Chitec Technology Co., Ltd. erhältlich z.B. als Chiguard^{®} 234, Chiguard^{®} 5528, Chiguard^{®} 5431, Chiguard^{®} 5530, Chiguard^{®} 5582.

Triazine-Typ UV-Absorber sind typischerweise 2-(2-Hydroxyphenyl)-1,3,5-Triazinderivate. Bevorzugt verwendete 2-(2-Hydroxyphenyl)-1,3,5-Triazine umfassen unter anderem 2,4,6-Tris(2-Hydroxy-4-octyloxyphenyl)-1,3,5-triazine, 2-(2-Hydroxy-4-octyloxyphenyl)-4,6-bis(2,4-dimethylphenyl)-1,3,5-triazine, Dihydroxyphenyl)-4,6-bis(2,4-dimethylphenyl)-1,3,5-triazine, 2,4-bis(2-Hydroxy-4-propyloxyphenyl) (2,4-dimethylphenyl)-1,3,5-triazine, 2-(2-Hydroxy-4-octyloxyphenyl)-4,6-bis(4-methylphenyl)-1,3,5-triazine, 2-(2-Hydroxy-4-dodecyloxyphenyl)-4,6-bis(2,4-dimethylphenyl)-1,3,5-triazine, 2-(2-Hydroxy-4-tridecyloxyphenyl)-4,6-bis(2,4-dimethylphenyl)-1,3,5-triazine, 2-[2-Hydroxy-4-(2-Hydroxy-3-butyloxypropoxy)phenyl]-4,6-bis(2,4-dimethyl)-1,3,5-triazine, 2-[2-Hydroxy-4-(2-Hydroxy-3-octyloxpropyloxy)phenyl]-4,6-bis(2,4-dimethyl)-1,3,5-triazine, 2-[4-(Dodecyloxy/Tridecyloxy-2-Hydroxypropoxy)-2-Hydroxyphenyl]-4,6-bis(2,4-dimethylphenyl)-1,3,5-triazine, 2-[2-Hydroxy-4-(2-Hydroxy-3-dodecyloxypropoxy)phenyl]-4,6-bis(2,4-dimethylphenyl)-1,3,5-triazine, 2-(2-Hydroxy-4-hexyloxy)phenyl-4,6-diphenyl-1,3,5-triazine, 2-(2-Hydroxy-4-methoxyphenyl)-4,6-diphenyl-1,3,5-triazine, 2,4,6-Tris[2-Hydroxy-4-(3-butoxy-2-Hydroxypropoxy)phenyl]-1,3,5-triazine, 2-(2-Hydroxyphenyl)-4-(4-Methoxyphenyl)-6-Phenyl-1,3,5-triazine, 2-{2-Hydroxy-4-[3-(2-ethylhexyl-1-oxy)-2-Hydroxypropyloxy]phenyl}-4,6-bis(2,4-di-methylphenyl)-1,3,5-triazine, 2,4-bis(4-[2-ethylhexyloxy]-2-Hydroxyphenyl)-6-(4-Methoxyphenyl)-1,3,5-triazine. Triazine-Typ UV-Absorber wie 2-(4,6-Diphenyl-1,3,5-triazin-2-yl)-5-hexyloxphenol können ebenfalls verwendet werden. Diese Verbindungen sind z.B. kommerziell von BASF SE (Ludwigshafen, Deutschland) unter den Marken Tinuvin^{®} 1600, Tinuvin^{®} 1577, Tinuvin^{®} 400 oder Tinuvin^{®} 1545 und von Chitec Technology Co., Ltd. erhältlich z.B. als Chiguard^{®} 1064, Chiguard^{®} 5400, Chiguard^{®} 5405, Chiguard^{®} 5577, Chiguard^{®} 460, Chiguard^{®} 477.

Sterisch gehinderte Amine, HALS (Hindered Amine Light Stabilizer) UV-Stabilisatoren sind bekannt. Sie können verwendet werden, um Alterungsphänomene in Farben und Kunststoffen, insbesondere in Polyolefinen, zu verhindern (Kunststoffe, 74 (1984) 10, S. 620-623; Farbe+Lack, Volume 96, 9/1990, S. 689-693). Die Tetramethylpiperidin-Gruppe, die in den HALS-Verbindungen vorhanden ist, ist für die stabilisierende Wirkung verantwortlich. Diese Verbindungen können entweder keine Substitution am Piperidin-Stickstoff aufweisen oder durch Alkyl- oder Acylgruppen am Piperidin-Stickstoff substituiert sein. Sterisch gehinderte Amine absorbieren nicht im UV-Bereich. Sie fangen freie Radikale, die gebildet wurden, während UV-Absorber dies nicht tun können. Beispiele für HALS-Verbindungen mit stabilisierender Wirkung, die auch in Mischungen verwendet werden können, sind: Bis(2,2,6,6-tetramethyl-4-piperidyl)sebacat, 8-Acetyl-3-dodecyl-7,7,9,9-tetramethyl-1,3,8-triazaspiro(4,5)-decane-2,5-dione, Bis(2,2,6,6-tetramethyl-4-piperidyl)succinat, Poly(N-β-hydroxyethyl-2,2,6,6-tetramethyl-4-hydroxypiperidine-succinat) oder Bis(N-methyl-2,2,6,6-tetramethylpiperidyl)sebacat. Diese Verbindungen sind z.B. kommerziell von BASF SE (Ludwigshafen, Deutschland) unter den Marken Tinuvin^{®} 123, Tinuvin^{®} 292, und von Chitec Technology Co., Ltd. erhältlich z.B. als Chiguard^{®} 100, Chiguard^{®} 353, Chiguard^{®} 2285, Chiguard^{®}101, Chiguard^{®} 106, Chiguard^{®} 4050.

Die Lichtstabilisierungsmittel werden typischerweise in einer Menge von 0,1 bis 10 Gew.-%, bevorzugt 0,5 bis 5 Gew.-%, bezogen auf das Gesamtgewicht der Lackzusammensetzung, eingesetzt.

Ferner kann die Lackzusammensetzung ein oder mehrere Benetzungsmittel umfassen, welche die Oberflächenspannung der Lackzusammensetzung herabsetzen und dadurch die Benetzung des Trägermaterials im Schritt (a) verbessern. Benetzungsmittel und Benetzungsmechanismen sind allgemein bekannt und werden beispielhaft in BASF-Handbuch Lackiertechnik, Prof. Dr. Artur Goldschmidt/Dr. Hans-Joachim Streitberger, 2002, Vincentz Verlag ISBN 3-87870-324-4 Kap. 2.1.4.2, 2.2.3, 3.1.1, ausführlich beschrieben.

Als geeignete Benetzungsmittel können insbesondere siloxanhaltige Verbindungen, polyacrylatbasierte Additive, fluorhaltige Tenside sowie EO/PO-Blockcopolymere, silikonfreie Tenside auf Basis von Alkoholalkoxylaten eingesetzt werden. Bevorzugte Benetzungsmittel sind solche, die keine nachteilige Wechselwirkung mit isocyanat- oder hydroxylfunktionellen Gruppen der Polyurethan(meth)acrylat-Bindemittel zeigen. Beispiele umfassen Polydimethylsiloxan-haltige Additive, modifizierte Polyether auf Acrylatbasis, fluorsubstituierte Alkylpolyether sowie nichtionische Tenside. Diese Additive tragen auch zur Verbesserung der Verlaufseigenschaften, zur Reduktion von Kraterbildung und zur gleichmäßigen Ausbildung der Lackfilme bei und sind beispielsweise bei dem Fachmann bekannten Herstellern wie BYK-Chemie GmbH (BYK-310, BYK-314, BYK-3765) oder Evonik Industries AG (TEGO^{®} WET, TEGO^{®} TWIN) erhältlich.

Die Konzentration des Benetzungsmittels in der erfindungsgemäß eingesetzten Lackzusammensetzung kann typischerweise 0,05 Gew.-% bis 2,0 Gew.-%, bezogen auf das Gesamtgewicht der Lackzusammensetzung, betragen.

Die Lackzusammensetzung ist typischerweise bei 25 °C und Normaldruck flüssig und weist beispielsweise eine Viskosität von 100 bis 3000 mPas auf.

Gemäß dem erfindungsgemäßen Verfahren wird die Lackzusammensetzung im Schritt (a) als Beschichtung auf ein Trägermaterial aufgetragen. Das Auftragen der Lackzusammensetzung kann mit bekannten Verfahren, z.B. mit Hilfe von Walzen oder Schlitzdüsen erfolgen. Die Beschichtung wird vorzugsweise so aufgetragen, dass ein geschlossener Film der Lackzusammensetzung auf dem Trägermaterial gebildet wird. Die aufgetragene Menge liegt vorzugsweise im Bereich von 20 bis 150 g/m², besonders bevorzugt im Bereich von 50 bis 100 g/m² .

Als Trägermaterial finden bei dem erfindungsgemäßen Verfahren vorzugsweise glatte, matte oder strukturierte, abweisend (mit Trennmitteln) imprägnierte oder abweisend beschichtete Papiere, Metallfolien, insbesondere Kupfer- oder Aluminiumfolien, und/oder Kunststofffolien Verwendung. Als Kunststofffolien sind insbesondere Polyethylenfolien, Polypropylenfolien oder Polyesterfolien z.B.: PET Folien, jeweils abweisend (mit Trennmitteln) vorbehandelt oder unvorbehandelt, geeignet. Verbundmaterialien aus oben genannten Papieren und Folien sind ebenfalls geeignet. Bevorzugt sind Papiere und Folien, die auch auf deren Rückseite abweisend vorbehandelt, z.B. mit Trennmittel z.B.: Silikon beschichtet sind. Eine zusätzliche Mikrostrukturierung der Rückseite unterstützt diesen Effekt. Dies unterstützt die Lagerfähigkeit des erfindungsgemäßen Produkts durch Verhinderung einer Verblockung in Produktrollen oder im Produktstapel. In einer weiterhin bevorzugten Ausführungsform ist das Trägermaterial transparent.

Besonders vorteilhaft für eine gute Transferierbarkeit der zu übertragenden Beschichtung auf die Zieloberfläche (Schichtpressstoffplatte) ist die Abstimmung der Haftung zwischen der Beschichtung und dem Trägermaterial. So können bei dem erfindungsgemäßen Verfahren einerseits unbeschichtete Trägermaterialien Verwendung finden, die aufgrund ihrer Oberflächenspannungen keine vollständige Haftung mit der Beschichtung erzeugen, andererseits können Trägermaterialienwie z.B. Papier mit Trennmitteln, beispielsweise auf Basis Stearinsäure, auf Wachs- oder Silikonbasis, versehen sein, um gewünschte Freigabeeigenschaften (Ablösbarkeit des Trägermaterials von der vollständig ausgehärteten Beschichtung) zu entwickeln. Durch optimale Steuerung der Freigabeeigenschaften bietet sich als weiterer Vorteil des erfindungsgemäßen Verfahrens die Möglichkeit, dass im allgemeinen nachträglich auf Schichtpressstoffplatten aufgebrachte Schutzfolien (Kaschierfolien) entfallen können, da bei der Transferierung von geeigneten Trägermaterialien (Basissubstraten) diese Trägermaterialien auf der mit der Beschichtung versehenen Schichtpressstoffplatte verbleiben und erst vom Endanwender entfernt werden. Wird als Trägermaterial ein transparentes Substrat verwendet, kann eine Qualitätskontrolle auf der Schichtpressstoffplattenoberfläche hinsichtlich Unreinheiten in der Plattenoberfläche wie Einschlüsse oder Farbdefekte, durch das transparente Trägermaterial hindurch, durchgeführt werden. Üblicherweise weist das Trägermaterial eine Dicke zwischen 10 µm und 1000 µm auf, vorzugweise zwischen 20 µm und 300 µm.

Die erfindungsgemäße Transferfolie umfasst somit das Trägermaterial, welches einerseits als oberflächengestaltendes Material und andererseits aufgrund der Abstimmung der Oberflächenenergien als Trennmedium fungieren kann, und einer Beschichtung, die ein thermoplastisches Polyurethan(meth)acrylat-Polymer umfasst. Die Beschichtung kann optional durch andere Vernetzungsverfahren als die radikalische oder ionische Polymerisation vernetzbare Substanzen enthalten, beispielsweise additiv oder durch Kondensationsreaktionen vernetzbare Basispolymere.

Nach dem Auftragen der Lackzusammensetzung erfolgt in einem nächsten Schritt (b) das Trocknen der Transferfolie, wobei eine Beschichtung gebildet wird, die ein thermoplastisches Polyurethan(meth)acrylat-Polymer umfasst. Wie für den Fachmann ersichtlich, bezieht sich der Begriff des Trocknens in diesem Zusammenhang auf den Übergang der Lackzusammensetzung von einem flüssigen Zustand in einen Zustand, in dem es bei Handhabung des Oberflächenmaterials bei Raumtemperatur, vorzugsweise bei einer Temperatur unter 50°C, nicht mehr fließfähig ist. Allfällig vorhandenes Lösemittel wird bei diesem Schritt ganz oder teilweise entfernt.

Das Trocknen erfolgt bei einer erhöhten Temperatur, bei der eine Reaktion der Hydroxygruppen in der Harzkomponente mit den Isocyanatgruppen der Härterkomponente in der Lackzusammensetzung stattfindet, so dass sich in der Beschichtung ein thermoplastisches Polyurethan(meth)acrylat-Polymer bildet, das Gruppen mit einer (meth)acrylischen Doppelbindung aufweist. Typischerweise wird das Trocknen bei einer Temperatur von 110 °C oder weniger, bevorzugt in einem Temperaturbereich von 70 bis 100 °C durchgeführt. Bei diesen Temperaturen ist gewährleistet, dass die Reaktion mit der Härterkomponente mit ausreichender Geschwindigkeit abläuft, während die (meth)acrylischen Doppelbindungen noch nicht polymerisiert werden. Unterstützend kann der Lackzusammensetzung ein Inhibitor zugegeben werden, der die Polymerisation der (meth)acrylischen Doppelbindungen während dem Schritt des Trocknens verhindert und ein Katalysator zugegeben werden, der die Reaktion der Isocyanatgruppen des Härters mit den Hydroxylgruppen der Harzkomponente beschleunigt. Auf diese Weise kann die Verarbeitbarkeit der Beschichtung auf vollautomatischen Rolle-Rolle Beschichtungsmaschinen optimal eingestellt werden.

Vorteilhafterweise weist die erfindungsgemäße Transferfolie nach dem Schritt des Trocknens eine Beschichtung auf, welche grifffest und gegenüber der Trägerrückseite blockfrei ist. Die Transferfolie kann bequem transportiert, gelagert und weiterverarbeitet werden und stellt daher ein wertvolles Zwischenprodukt bei der Herstellung von Schichtpressstoffplatten dar. Üblicherweise weist die Beschichtung nach dem Trocknen eine Dicke zwischen 2,0 µm und 1000 µm auf, vorzugweise zwischen 10 µm und 300 µm.

Die erfindungsgemäße Transferfolie kann beispielsweise Eingang in den Herstellungsprozess von Schichtpressstoffplatten finden, indem die Transferfolie auf eine Kernlage bestehend aus mit Kunstharz getränktem Material ein- oder beidseitig aufgelegt wird, wobei die Seite der zu transferierenden Beschichtung zur Kernlage hin gelegt wird, dieser Verbund unter den üblichen Temperatur-, Druck- und Zeitbedingungen verpresst wird und nach dem Erkalten das Trägermaterial abgezogen oder zum Schutz der Plattenoberfläche bis inklusive der Endverarbeitung (Plattenzuschnitt) darauf belassen werden kann. Es resultiert eine Schichtpressstoffplatte, deren Oberfläche den Glanz- oder Mattgrad des Trägermaterials übernommen hat, und die eine hohe Kratzfestigkeit und Chemikalienbeständigkeit aufweist und hervorragende Bewitterungsstabilität bietet.

Nach dem Trocknen der Transferfolie wird ein Pressstapel bereitgestellt, der ein Material zum Bilden einer Kernlage einer Schichtpressstoffplatte und die erfindungsgemäße Transferfolie als Oberflächenlage enthält. Zumindest auf einer Seite des Pressstapels, optional auf beiden Seiten, bildet die getrocknete, erfindungsgemäße Transferfolie die äußerste Lage des Pressstapels, und das Trägermaterial ist auf mindestens einer Oberfläche, optional auf beiden Oberflächen, des Pressstapels angeordnet.

Das Material zum Bilden einer Kernlage einer Schichtpressstoffplatte umfasst eine oder mehrere, bevorzugt mehrere Lagen eines mit härtbarem Kunstharz getränkten Materials. Geeignete Materialien sind dem Fachmann geläufig. Es handelt sich dabei generell um ein flächiges Material, d.h. ein Material, dessen Länge und Breite erheblich größer sind als seine Dicke, wie eine Folie, eine Platte, eine Materialbahn oder ein Bogen eines Materials. Die Lagen können aus dem gleichen Material oder aus zwei oder mehr unterschiedlichen Materialien bestehen.

Das Material zum Bilden einer Kernlage einer Schichtpressstoffplatte umfasst eine oder mehrere, bevorzugt mehrere Lagen des mit härtbarem Kunstharz getränkten Materials. Bevorzugt liegt die Zahl der Lagen im Bereich von 1 bis 200, insbesondere 2 bis 120.

In einer besonders bevorzugten Ausführugsform enthält das Material zum Bilden einer Kernlage, ganz außen zumindest an einer Seite eine dekorative Schicht. Beispiele für geeignete Materialien für eine dekorative Schicht sind Vliese, Non-wovens oder Gewebe aus natürlichen oder synthetischen organischen oder anorganischen Fasern, insbesondere in Form von Bahnen solcher Materialien, Bahnen oder Folien aus Kunststoffen (Thermoplaste, Duroplaste, oder Elastomere), Metall, Holz, Stein, Glas, oder Verbundmaterialien. Ein bevorzugtes Beispiel für ein geeignetes Material ist Papier, z.B. in Form einer Papierbahn. Besonders bevorzugt als Material für eine dekorative Schicht ist eine mit einem härtbaren Kunstharz getränkte, gefärbte oder bedruckte Papierbahn. Als härtbares Kunstharz können hier Kunstharze zum Einsatz kommen, die für die Anwendung in Schichtpressstoffplatten bekannt sind, wie Phenol-Formaldehyd-Harz (PF-Harz), Melamin-Formaldehydharz (MF-Harz), Harnstoff-Formaldehyd-Harz (UF-Harz) oder Mischharze daraus, Epoxidharze, Polyesterharze, Thermoplaste oder Elastomere. Bevorzugt werden als härtbare Kunstharze Phenol-Formaldehyd-Harz (PF-Harz), Melamin-Formaldehydharz (MF-Harz), Harnstoff-Formaldehyd-Harz (UF-Harz) oder Mischharze daraus eingesetzt.

Nach dem Bereitstellen des Pressstapels wird der Stapel bei erhöhtem Druck und einer Temperatur oberhalb der Trocknungstemperatur verpresst, bei der die erfindungsgemäße Transferfolie getrocknet wurde. Die Temperatur ist ausreichend hoch gewählt, dass eine Polymerisation der (meth)acrylischen Doppelbindungen in der getrockneten Beschichtung stattfindet. Der beim Verpressen angewandte Druck liegt in der Regel im Bereich von 300 bis 900 N/cm² (3,0 bis 9,0 MPa). Der Fachmann ist in der Lage, einen für sein Pressensystem geeigneten Pressdruck zu wählen und entsprechend einzustellen. Die Temperatur liegt in der Regel oberhalb von 110 °C, bevorzugt im Bereich von 135 bis 210 °C. Das Verpressen erfolgt in der Regel über einen Zeitraum von 30 Sekunden bis 100 Minuten.

Wenn gewünscht, kann das Verpressen in einer Heißpresse durchgeführt werden, die mit einer strukturgebenden Oberfläche versehen ist und die der Schichtpressstoffplatte eine Oberflächenstruktur verleiht.

Vorzugsweise umfasst die Kernlage mindestens eine dekorative Schicht, die an zumindest einer Aussenseite der Kernlage angeordnet ist.

Erfindungsgemäß wird eine Schichtpressstoffplatte mit einer Kernlage und einer Oberflächenlage an mindestens einer Plattenoberfläche gebildet, die als äußerste Schicht eine Beschichtung mit einem vernetzten Polyurethan(meth)acrylat-Polymer aufweist. Das vernetzte Polyurethan(meth)-acrylatPolymer umfasst sowohl polymerisierte Einheiten, die mit Hilfe von Urethanbindungen verbunden sind, als auch polymerisierte Einheiten, die mit Hilfe der Polymerisationsreaktion der (meth)acrylischen Doppelbindungen über Kohlenstoff-Kohlenstoff-Bindungen verbunden sind. Darüber hinaus enthält das vernetzte Polyurethan(meth)acrylat-Polymer durch die Verwendung eines Haftvermittlers in der Lackzusammensetzung an den Grenzflächen zu Kernlagen auch Untereinheiten, die durch ein Harz mit einem Phenol- oder Aminoplast-Grundgerüst gebildet werden. Vorzugsweise besteht die Beschichtung aus dem vernetzten Polyurethan(meth)acrylat-Polymer, das wie vorstehend beschrieben aus der Harzkomponente, der Härterkomponente, des Haftvermittlers sowie den optionalen Zusatzstoffen gebildet wurde.

Erfindungsgemäß werden so Schichtpressstoffplatten mit einer Kernlage und einer Transferfolie an mindestens einer Plattenoberfläche bereitgestellt, die als äußerste Schicht das Trägermaterial der Transferfolie aufweisen. Wenn ein Haftvermittler eingesetzt wurde, weist das vernetzte Polyurethan(meth)acrylat-Polymer an den Grenzflächen zu Kernlagen Untereinheiten auf, die durch Reaktion des Haftvermittlers mit einem Harz mit einem Phenol- oder Aminoplast-Grundgerüst gebildet werden. Nach abziehen des Trägermaterials weist die Beschichtung, welche ein vernetztes Polyurethan(meth)acrylat-Polymer umfasst, eine hohe Kratzfestigkeit auf und ihr Glanzgrad verändert sich während der Bewitterung nur geringfügig. Darüber hinaus weist die Oberfläche der erhaltenen Schichtpressstoffplatte eine Fleckenempfindlichkeit mit Grad 5, gemessen nach EN 438-2.26:2019 auf und kann daher leicht von Graffitis und anderen Verschmutzungen gereinigt (Easy to clean) werden. Insbesondere weist die Oberfläche eine Kratzfestigkeit von ≥ 6N, gemessen nach EN 438-2.25:2019, und eine Änderung des Glanzgrades nach einer Bewitterung von 3000 Stunden nach dem Verfahren EN 438-2.29:2019, gemessen nach DIN EN ISO 2813:2015-02 bei einem Winke! von 60°, von nicht mehr als 3 Glanzeinheiten, vorzugsweise nicht mehr als 2, auf.

Darüber hinaus zeigt die Beschichtung hervorragende optische Eigenschaften gemäß EN 438-2:2019, Abschnitt 14 und 15 Grad 5. (keine Veränderung). Bei einer anschließenden Haftungsprüfung mittels Gittterschnitt gemäß ISO 2400 zeigt die Beschichtung sehr gute Haftungseigenschaften und Prüfwerte von Gt 0-1.

Die Haftung zwischen den als Kern dienenden flächigen Materialien (Kernlage) und der über das Trägermaterial aufgetragenen Beschichtung hängt naturgemäß von dem verwendeten flächigen Material ab. Um eine entsprechende Haftung zu erreichen, sieht die Erfindung dabei im Wesentlichen zwei grundlegende Mechanismen vor, nämlich einerseits die Verwendung einer Beschichtungszusammensetzung, die ein thermoplastisches Polyurethan(meth)acrylat-Polymer umfasst, das durch Aufschmelzen unter Druck und erhöhter Temperatur und der daraus resultierenden Thermoplastizität in vorhandene Poren und Unebenheiten der Kernlage einfließt und dadurch damit physikalisch verklebt und andererseits optional zusätzlich einen geeigneten Haftvermittler enthält, der eine zusätzliche chemische Anbindung der Beschichtung die ein thermoplasitisches Polyurethan(meth)acrylat-Polymer umfasst, an die Kernlage ermöglicht oder beides. Für den zweitgenannten Fall, wie bereits vorstehend beschrieben, kann der Lackzusammensetzung ein Haftvermittler zugesetzt werden, der eine gezielte Haftungssteuerung aufgrund ausgewählter physikalischer oder chemischer Eigenschaften ermöglicht.

Das erfindungsgemäße Verfahren hat gegenüber einem Direktverfahren (direkte Aufbringung der Beschichtung auf die Kernlage) den Vorteil, dass das Verfahren im Wesentlichen unabhängig ist von der Menge und Dekore der zu beschichtenden Materialien. Mit anderen Worten, mit dem erfindungsgemäßen Verfahren können auch kleinere Chargen abgedeckt werden. Beispielsweise kann hiermit eine Vielzahl von kleineren Materialchargen, die jeweils mit einem unterschiedlichen Oberflächendekor versehen sind, mit einer verschleißfesten und bewitterungsstabilen Beschichtung versehen werden, da die erfindungsgemäße Transferfolie nicht nur ohne weiteres in kleineren Mengen hergestellt werden, sondern chargengrößen- und dekorunabhängig in stets gleicher Form eingesetzt werden kann.

Die Beschichtungsaufbringung erfolgt im letzten Schritt der Schichtpressstoffplattenherstellung. Dabei kann das erfindungsgemäße Verfahren auf kontinuierliche und auf diskontinuierliche Weise durchgeführt werden.

Durch Ausgestaltung der mit der Beschichtung in Kontakt tretenden Seite des Trägermateriales können auch beispielsweise dekorative Eigenschaften, wie spezielle Strukturen, Farbigkeit, Mattheit, aber auch Funktionen wie durch Mikrorauigkeiten eingebrachte Easy to Clean oder Anti-Fingerprint Eigenschaften auf die Beschichtung und damit auf die mit der Beschichtung zu versehenden Kernlage übertragen werden. Insgesamt bietet das Verfahren wesentliche ökonomische Vorteile, weil auch Einzelelemente nach dem Verfahren mit einem Oberflächenschutz versehen werden können und somit keine Beschränkung auf größere Mengen vorhanden ist.

Ferner ist bei dem Einsatz der vorstehend beschriebenen Lackzusammensetzung insbesondere von Vorteil, dass durch das thermoplastische Verhalten des thermoplastischen Polyurethan(meth)-acrylat-Polymers eine sehr gute Verformbarkeit der Transferbeschichtung beim Verpressen zu einer HPL oder einer CPL Platte erreicht wird, während gleichzeitig eine hohe Vernetzungsdichte und damit herausragende Beständigkeit der im gleichen Prozessschritt erzeugten Plattenoberflächen erzielt werden. Hierzu kommt, dass die beschriebenen Schichten besonders hervorragend aneinander haften. Diese Haftung geht auch bei üblichen thermischen, mechanischen oder chemischen Einflüssen nicht verloren.

Während der Herstellung der Schichtpressstoffplatte gewährleistet die Beschichtung der erfindungsgemäßen Transferfolie eine hervorragende chemische und/oder mechanische Haftung an die Kernlage der Schichtpressstoffplatte. Auf eine zusätzliche Verwendung von im Stand der Technik üblichen Klebeschichten kann daher verzichtet werden.

Die mit dem erfindungsgemäßen Verfahren hergestellten Schichtpressstoffplatten zeichnen sich durch besonders gute Verschleißeigenschaften, insbesondere durch eine hohe Kratzfestigkeit und Bewitterungsbeständigkeit aus. Sie sind für Innenanwendungen, aber besonders bevorzugt auch für Außenanwendungen, beispielsweise Wandverkleidungen, Überdachungselemente oder Outdoor-Möbel geeignet. Das erfindungsgemäße Verfahren ermöglicht insbesondere die Kombination von besonders kratzfesten Oberflächen mit dekorativen Gestaltungsmöglichkeiten, wobei sich die erfindungsgemäß erhaltenen Materialien durch eine besonders lange Lebensdauer auszeichnen. Die Schichtpressstoffplatten können kontinuierlich in Form von Bahnen, aber auch diskontinuierlich als einzelne Elemente hergestellt werden.

Die erfindungsgemäße Schichtpressstoffplatte eignet sich insbesondere zur Herstellung eines Bauteils, vorzugsweise eines Fassadenelements, unter Anwendung eines Verfahrens, das die nachfolgenden Verfahrensschritte i) bis iv) umfasst:
i) Bereitstellen einer Schichtpressstoffplatte;
ii) optional, Verarbeiten der Schichtpressstoffplatte;
iii) Montage der Schichtpressstoffplatte aus dem Schritt (i) oder (ii);
iv) Entfernung des Trägermaterials.

Die im Schritt i) bereitgestellte Schichtpressstoffplatte kann in einem optionalen zweiten Schritt ii) verarbeitet werden. Die Verarbeitung kann beispielsweise Zuschneiden, Bohren, Fräsen, Stanzen, Kantenbearbeitung, Einbringen von Verbindungselementen oder andere mechanische Bearbeitungsschritte umfassen. Die Verarbeitung kann automatisiert oder manuell erfolgen und dient der Anpassung an die spezifischen Anforderungen des späteren Bauteils oder Einsatzorts. Dieser Verarbeitungsschritt kann entfallen, sofern die im Schritt i) bereitgestellte Schichtpressstoffplatte bereits in der gewünschten Form und Dimension vorliegt.

Die verarbeitete oder unbearbeitete Schichtpressstoffplatte wird im Schritt iii) in oder an dem Zielbauteil montiert. Bei einer Anwendung im Fassadenbau kann dies beispielsweise das Einfügen der Platte in ein Tragrahmensystem, das Aufbringen auf eine Unterkonstruktion oder das Verkleben auf einem Trägermaterial sein. Die Montage kann auch ein temporäres Fixieren beinhalten, falls die Entfernung des Trägermaterials im nächsten Schritt erst nach der Fixierung erfolgen soll.

Nach der Montage wird das Trägermaterial im Schritt vi) entfernt. Dies kann durch Abziehen, Ablösen oder maschinelles Entfernen erfolgen. Die Entfernung erfolgt vorzugsweise nach der Montage, um während der Bearbeitung und Handhabung einen Schutz der Dekoroberfläche der Schichtpressstoffplatte zu gewährleisten. Die Verwendung von einer zusätzlichen Kaschierfolie ist daher nicht erforderlich.

Das erfindungsgemäße Verfahren ermöglicht insbesondere eine prozesssichere Herstellung und Montage von dekorativen und/oder funktionalen Bauteilen mit hoher Oberflächenqualität. Durch die Verwendung von HPL- oder CPL-Platten wird eine hohe Beständigkeit gegen Witterungseinflüsse, mechanische Belastung und UV-Strahlung erzielt, was die Eignung als Fassadenelement unterstreicht.

Die Erfindung wird nachfolgend anhand von Ausführungsbeispielen im Einzelnen beschrieben.

### Beispiele

### Mengenangaben in Gramm

### Beispiel 1

### Lackzusammensetzung:

| | |
|---|---|
| Komponente A, Urethanacrylat aliphatisch, Doppelbindungsdichte: 8,0 mol/kg, 2,5 mol/kg Urethangruppen | 346,3 |
| Komponente B, Urethanacrylat aliphatisch, Doppelbindungsdichte: 4,5 mol/kg, 3,0 mol/kg Urethangruppen, Hydroxylgruppengehalt: 3,0 mol/kg | 378,4 |
| HDI Trimer: Äquivalentgewicht: 185 g (Härterkomponente) | 220,5 |
| Butylacetat (Lösungsmittel) | 598,0 |
| Dibutylzinndilaurat (Katalysator) | 3,5 |
| tert-Butylperoxybenzoat (Polymerisationsstarter) | 2,4 |
| Chiguard ^{®} 5400 (UV Absorber) | 14,5 |
| Chiguard ^{®} 5530 (UV Absorber) | 4,2 |
| Chiguard ^{®} 353 (HALS) | 12,5 |
| Epoxipropylether des Glycerins GE 100 (Haftvermittler) | 36,2 |

Die Lackzusammensetzung wurde auf ein strukturiertes aluminiumkaschiertes Papier auf dessen Aluminiumseite mit einer Schichtstärke von 100 µm aufgerakelt und im Heißlufttrockenschrank bei 100 °C für 5 Minuten getrocknet. Anschließend wurde der erhaltene Papier-Aluminium-Lackverbund (Transferfolie) mit der Lackseite in direkten Kontakt auf einen Stapel aus melaminharzimprägniertem Dekorpapier und phenolharzimprägnierten Kernpapieren gelegt und gemeinsam mit diesen zur Endaushärtung bei 145 °C für 10 Minuten bei einem Druck von 700 N/cm² verpresst.

Nach Abkühlen wurde eine Schichtpressstoffplatte (HPL) erhalten, von der das aluminiumkaschierte Papier mit geringem Kraftaufwand abgezogen werden konnte und der endausgehärtete Lack untrennbar mit der Melaminharzschicht der resultierenden HPL Platte verbunden war. Dabei hatte der nun harte und kratzfeste Lack die Oberflächenstruktur des mit Aluminium kaschierten Papieres übernommen.

### Beispiel 2

### Lackzusammensetzung:

| | |
|---|---|
| Komponente A, aliphatisches Triacrylat/Tetraacrylatgemisch, Doppelbindungsdichte: 10,7 mol/kg (keine Urethangruppen, keine Hydroxylgruppen) | 300,0 |
| Komponente B, Urethanacrylat aliphatisch, Doppelbindungsdichte: 4,5 mol/kg, 3,0 mol/kg Urethangruppen, Hydroxylgruppengehalt: 3,0 mol/kg | 445,0 |
| HDI Trimer: Äquivalentgewicht: 185 g (Härterkomponente) | 259,0 |
| Ethylacetat/Butylacetat 1:1 | 320,0 |
| Dibutylzinndilaurat (Katalysator) | 2,9 |
| tert-Butylperoxybenzoat (Polymerisationsstarter) | 2,1 |
| Chiguard^{®} 5400 (UV Absorber) | 10,7 |
| Chiguard^{®} 5530 UV Absorber | 3,10 |
| Chiguard^{®} 353 (HALS) | 9,2 |
| Byk 3760 (Benetzungshilfsmittel) | 6,5 |
| Oxethangruppenhaltiges Urethantriacrylat, Doppelbindungsdichte 4,7 mol/kg, Urethangruppen: 3,1 mol/kg; Oxethangruppen: 1,6 mol/kg (Haftvermittler) | 52,0 |

Die Lackzusammensetzung wurde auf ein strukturiertes Silikon-Release Papier auf dessen strukturierte silikonierte Seite mit einer Schichtstärke von 100 µm aufgerakelt und im Heißlufttrockenschrank bei 100 °C für 5 Minuten getrocknet. Anschließend wurde der erhaltene Papier-Lackverbund (Transferfolie) mit der Lackseite in direkten Kontakt auf einen Stapel aus melaminharzimprägniertem Dekorpapier und phenolharzimprägnierten Kernpapieren gelegt und gemeinsam mit diesen zur Endaushärtung bei 145 °C für 10 Minuten bei einem Druck von 700 N/cm² verpresst.

Nach dem Abkühlen wurde eine Schichtpressstoffplatte (HPL) erhalten, von der das Silikon-Release Papier mit geringem Kraftaufwand abgezogen werden konnte und der endausgehärtete Lack untrennbar mit der Melaminharzschicht der resultierenden Platte verbunden war. Dabei hatte der nun harte und kratzfeste Lack die Oberflächenstruktur des Silikon-release Papieres übernommen.

### Beispiel 3

### Lackzusammensetzung:

| | |
|---|---|
| Komponente A, Urethanacrylat aliphatisch, Doppelbindungsdichte: 4,0 mol/kg, 1,3 mol/kg Urethangruppen | 235,0 |
| Komponente B, Urethanacrylat aliphatisch, Doppelbindungsdichte: 3,5 mol/kg, 2,5 mol/kg Urethangruppen, Hydroxylgruppengehalt: 2,5 mol/kg | 395,0 |
| HDI Trimer: Äquivalentgewicht: 185 g (Härterkomponente) | 200,1 |
| Vestanat ^{®} B1358/100 (Evonik) Blockiertes Polyisocyanat auf Basis IPDI (Härterkomponente und Haftvermittler) | 60,0 |
| Ethylacetat | 450,0 |
| Dibutylzinndilaurat (Katalysator) | 2,8 |
| tert-Butylperoxybenzoat (Polymerisationsstarter) | 1,3 |
| Chiguard^{®} 5400 (UV Absorber) | 12,9 |
| Chiguard^{®} 5530 (UV Absorber) | 3,7 |
| Chiguard^{®} 353 (HALS) | 11,1 |

Die Lackzusammensetzung wurde auf eine glatte Polyesterfolie mit einer Schichtstärke von 100 µm aufgerakelt und im Heißlufttrockenschrank bei 100 °C für 5 Minuten getrocknet und vorvernetzt. Anschließend wurde der erhaltene Folien-Lackverbund (Transferfolie) mit der Lackseite in direkten Kontakt auf einen Stapel aus melaminharzimprägniertem blauen Dekorpapier und phenolharzimprägnierten Kernpapieren gelegt und gemeinsam mit diesen zur Endaushärtung bei 140 °C für 10 Minuten bei einem Druck von 700 N/cm² verpresst. Zuvor wurden zur Simulation von Verschmutzung des Dekorpapieres mit einem Bleistift ca. 1x1 mm große Markierungen auf das Dekorpapier gezeichnet.

Als Strukturgeber wurde eine Pressmatrize mit Holzporenoptik direkt an der Polyesterfolie anliegend im oben angeführten Verpressungsschritt mit verpresst. Nach Abkühlen wurde eine Schichtpressstoffplatte (HPL) erhalten, von der die Polyesterfolie mit geringem Kraftaufwand abgezogen werden konnte und der endausgehärtete Lack untrennbar mit der Melaminharzschicht des Dekorpapieres verbunden war. Dabei hatte der nun harte und kratzfeste Lack die Oberflächenstruktur der Pressmatrize übernommen. Vor dem Abziehen der Polyesterfolie konnten, die vor der Verpressung auf dem Dekorpapier mittels Bleistift aufgebrachten Markierungen durch die transparente Polyesterfolie hindurch eindeutig identifiziert werden.

## Patentansprüche

1. Verfahren zur Herstellung einer Transferfolie, umfassend ein Trägermaterial und eine Beschichtung, die ein thermoplastisches Polyurethan(meth)acrylat-Polymer umfasst, wobei das Verfahren die folgenden Schritte umfasst:
a) Auftragen einer Lackzusammensetzung auf ein Trägermaterial, wobei die Lackzusammensetzung eine Harzkomponente und eine Härterkomponente umfasst,
wobei die Harzkomponente als Gemisch vorliegt, das mindestens eine Komponente A und mindestens eine Komponente B umfasst, wobei
die Komponente A eine polymerisierbare (Meth)acrylatverbindung ist, die pro Molekül mindestens 2 Gruppen mit einer (meth)acrylischen Doppelbindung und keine Hydroxygruppen aufweist, und
die Komponente B eine polymerisierbare (Meth)acrylatverbindung ist, die pro Molekül eine oder mehrere Gruppen mit einer (meth)acrylischen Doppelbindung und mindestens 2 Hydroxygruppen aufweist;
b) Trocknen des im Schritt a) beschichteten Trägermaterials bei einer erhöhten Temperatur, bei der eine Reaktion der Hydroxygruppen in der Harzkomponente mit den Isocyanatgruppen der Härterkomponente stattfindet, so dass sich eine Beschichtung bildet, welche das thermoplastische Polyurethan(meth)acrylat-Polymer umfasst, das Gruppen mit (meth)acrylischen Doppelbindungen aufweist.

2. Verfahren nach Anspruch 1, wobei die Komponente A neben den Gruppen mit einer (meth)acrylischen Doppelbindung keine weiteren reaktiven Gruppen aufweist.

3. Verfahren nach Anspruch 1 oder 2, wobei die polymerisierbare (Meth)acrylatverbindung der Komponente A eine Verbindung der folgenden Formel A1 umfasst: 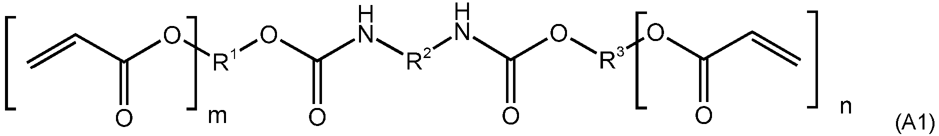 worin
R¹ und R³ jeweils unabhängig voneinander ausgewählt sind aus einer aliphatischen Kohlenwasserstoffgruppe, einer aliphatischen Polyethergruppe und einer aliphatischen Polyestergruppe,
R² eine aliphatische oder cycloaliphatische Kohlenwasserstoffgruppe ist, und
n und m jeweils unabhängig voneinander 2 bis 9 sind.

4. Verfahren nach mindestens einem der Ansprüche 1 bis 3, wobei die polymerisierbare (Meth)acrylatverbindung der Komponente A eine Verbindung der folgenden Formel A2 umfasst: 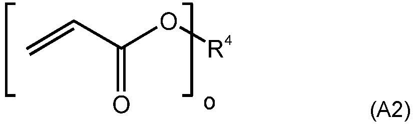 worin
R⁴ eine aliphatische Kohlenwasserstoffgruppe ist, und
o 2 bis 6 ist.

5. Verfahren nach mindestens einem der Ansprüche 1 bis 4, wobei die polymerisierbare (Meth)acrylatverbindung der Komponente B eine Verbindung der folgenden Formel B1 umfasst: 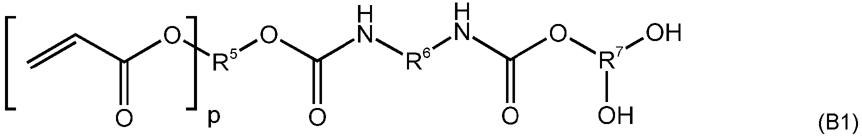 worin
R⁵ ausgewählt ist aus einer aliphatischen Kohlenwasserstoffgruppe, einer aliphatischen Polyethergruppe und einer aliphatischen Polyestergruppe,
R⁶ und R⁷ jeweils unabhängig voneinander ein aliphatischer oder cycloaliphatischer Kohlenwasserstoffrest sind, und
p 2 bis 9 ist.

6. Verfahren nach mindestens einem der Ansprüche 1 bis 5, wobei die Harzkomponente ferner mindestens eine Komponente C umfasst, welche ein Polyurethan-Präpolymer ist, das pro Molekül mindestens 2 Hydroxygruppen, vorzugsweise genau 2 Hydroxygruppen und keine Isocyanatgruppen aufweist; und
wobei das Polyurethan-Präpolymer der Komponente C neben den Hydroxygruppen vorzugsweise keine weiteren reaktiven Gruppen aufweist, und
wobei das Polyurethan-Präpolymer der Komponente C vorzugsweise mindestens eine Verbindung der Formel C1 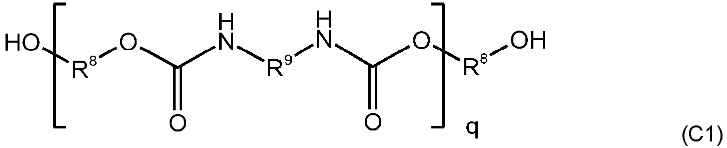 worin
R⁸ unabhängig voneinander bei jedem Auftreten ausgewählt sind aus einer aliphatischen Kohlenwasserstoffgruppe, die mit einer oder mehreren Hydroxygruppen substituiert sein kann, einer aliphatischen Polyethergruppe und einer aliphatischen Polyestergruppe,
R⁹ unabhängig voneinander bei jedem Auftreten eine aliphatische oder cycloaliphatische Kohlenwasserstoffgruppe ist, und
q 2 bis 9 ist; und/oder
vorzugsweise mindestens eine Verbindung der Formel C2 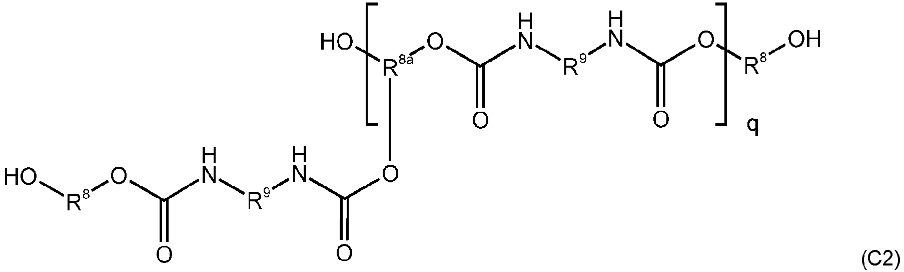 worin
R⁸ und R^{8a} unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe,
R⁹ unabhängig voneinander bei jedem Auftreten eine aliphatische oder cycloaliphatische Kohlenwasserstoffgruppe ist, und
q 2 bis 9 ist;
umfasst.

7. Verfahren nach mindestens einem der Ansprüche 1 bis 6, wobei die Harzkomponente ferner mindestens einen Haftvermittler umfasst.

8. Verfahren nach mindestens einem der Ansprüche 1 bis 7, wobei die Harzkomponente
30,0 bis 80,0 Gew.-% der Komponente A,
15,0 bis 70,0 Gew.-% der Komponente B,
0,0 bis 5,0 Gew.-% der Komponente C und
0,0 bis 10,0 Gew.-% des Haftvermittlers
umfasst, bezogen auf das Gesamtgewicht der Harzkomponente.

9. Verfahren nach mindestens einem der Ansprüche 1 bis 8, wobei das Trocknen im Schritt (b) bei einer Temperatur von 110 °C oder weniger durchgeführt wird.

10. Verfahren nach mindestens einem der Ansprüche 1 bis 9, wobei das Trägermaterial mit einer strukturgebenden Oberfläche versehen ist.

11. Transferfolie, umfassend ein Trägermaterial und eine Beschichtung, wobei die Beschichtung ein thermoplastisches Polyurethan(meth)acrylat-Polymer umfasst, und die Transferfolie nach dem Verfahren nach mindestens einem der Ansprüche 1 bis 10 erhältlich ist.

12. Transferfolie nach Anspruch 11, wobei zwischen der Beschichtung, welche ein thermoplastisches Polyurethan(meth)acrylat-Polymer umfasst, und dem Trägermaterial eine Trennschicht angeordnet ist.

13. Verfahren zur Herstellung einer Schichtpressstoffplatte umfassend
ein Trägermaterial,
eine Beschichtung, welche ein vernetztes Polyurethan(meth)acrylat-Polymer umfasst, und
eine Kernlage,
wobei die Schichtpressstoffplatte als äußerste Schicht das Trägermaterial aufweist und die Beschichtung zwischen dem Trägermaterial und der Kernlage angeordnet ist; und
wobei das Verfahren die folgenden Schritte umfasst:
i) Bereitstellen einer Transferfolie nach Anspruch 11 oder 12;
ii) Bereitstellen eines Pressstapels, der ein Material zum Bilden einer Kernlage einer Schichtpressstoffplatte und der im Schritt i) bereitgestellten Transferfolie als Oberflächenlage umfasst, so dass zumindest auf einer Seite des Pressstapels die im Schritt i) bereitgestellte Transferfolie die äußerste Lage bildet, und wobei das Trägermaterial auf mindestens einer Oberfläche des Pressstapels vorliegt;
ii) Verpressen des Pressstapels bei erhöhtem Druck und Temperatur, wobei in der Beschichtung eine Polymerisation der (meth)acrylischen Doppelbindungen des thermoplastischen Polyurethan-Polymers stattfindet.

14. Schichtpressstoffplatte, welche
ein Trägermaterial,
eine Beschichtung umfassend ein vernetztes Polyurethan(meth)acrylat-Polymer, und
eine Kernlage,
umfasst, wobei die Schichtpressstoffplatte als äußerste Schicht das Trägermaterial aufweist und die Beschichtung zwischen dem Trägermaterial und der Kernlage angeordnet ist,
und nach dem Verfahren nach Anspruch 13 erhältlich ist, wobei die Beschichtung vorzugweise
eine Bewitterungsbeständigkeit gemäß EN 438-2:2019, Abschnitt 29, bei der nach über 3000 Stunden die Änderung des Glanzgrades, gemessen nach DIN EN ISO 2813:2015-02, bei einem Winkel von 60° höchstens 3 Glanzeinheiten beträgt; und/oder
eine Farbstabilität gemäß Graumaßstab EN 20105-A02 in Grad 5 vor (keine Veränderung) und/oder eine Fleckenempfindlichkeit gemäß EN 438-2:2019, Abschnitt 26, bei der die Oberfläche mindestens Grad 5 erreicht; und/oder
optische Eigenschaften gemäß EN 438-2:2019, Abschnitt 14 und 15 Grad 5 (keine Veränderung), wobei bei anschließender Haftungsprüfung mittels Gittterschnitt gemäß ISO 2400 die Beschichtung Prüfwerte von Gt 0-1 zeigt.

15. Verfahren zur Herstellung eines Bauteils, wobei das Verfahren die folgenden Schritte umfasst:
i) Bereitstellen einer Schichtpressstoffplatte nach Anspruch 14;
ii) optional, Verarbeiten der Schichtpressstoffplatte;
iii) Montage der Schichtpressstoffplatte aus dem Schritt i) oder ii);
iv) Entfernung des Trägermaterials.
